# EUROPEAN PATENT APPLICATION

(11) **EP 4 654 685 A1**
(43) Date of publication of application: **26.11.2025**
(21) Application number: 23916679.6
(22) Date of filing: 17.01.2023
(51) Int. Cl.: H04W 64/00

(54) **COMMUNICATION METHOD, APPARATUS AND DEVICE, AND STORAGE MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); XU, Weijie, Dongguan, Guangdong 523860 (CN)
(74) Representative: Penza, Giancarlo
(86) International application number: PCT/CN2023/072554
(87) International publication number: WO 2024/152188

(57) **Abstract**

Embodiments of the present application provide a communication method, apparatus and device, and a storage medium, a chip, a product and a program. The method comprises: a first electronic tag sends a first signal, the first signal being used for a first device to perform measurement to obtain a first measurement result or being used for a second device to perform measurement to obtain a second measurement result, and the first measurement result or the second measurement result being used for determining location information of the second device.

## Description

### TECHNICAL FIELD

Embodiments of the present disclosure relate to the technical field of mobile communication, and in particular to a communication method and apparatus, a device, a storage medium, a chip, a product, and a program.

### BACKGROUND

In order to support various requirements such as public safety services, emergency warning, navigation and object search, asset management, etc., wireless positioning technology has also attracted extensive attention and research. How to accurately determine the position of a device is a constant concern in the art.

### SUMMARY

Embodiments of the present disclosure provide a communication method, a device, an apparatus, a storage medium, a chip, a product, and a program.

In the first aspect, the embodiments of the present disclosure provide a communication method. The method includes the following operation.

The first electronic tag sends the first signal. The first signal is used for measurement performed by the first device to obtain the first measurement result or for measurement performed by the second device to obtain the second measurement result, and the first measurement result or the second measurement result is used for determining position information of the second device.

In the second aspect, the embodiments of the present disclosure provide a communication method. The method includes the following operations.

The first device measures the first signal sent by each of at least one electronic tag, to obtain at least one first measurement result. The first device measures the third signal sent by the second device, to obtain the third measurement result. The third measurement result and the at least one first measurement result are used to determine position information of the second device.

In the third aspect, the embodiments of the present disclosure provide a communication method. The method includes the following operations.

The second device measures the first signal sent by each of at least one electronic tag to obtain at least one second measurement result, and/or the second device sends the third signal. The at least one second measurement result is used to determine position information of the second device. The third signal is used for measurement performed by the first device to obtain the third measurement result, and the third measurement result is used for determining the position information of the second device in combination with at least one first measurement result obtained by measuring, by the first device, the first signal sent by each of the at least one electronic tag.

In the fourth aspect, the embodiments of the present disclosure provide a communication apparatus. The communication apparatus includes a communication unit.

The communication unit is configured to send the first signal. The first signal is used for measurement performed by the first device to obtain the first measurement result or for measurement performed by the second device to obtain the second measurement result, and the first measurement result or the second measurement result is used for determining position information of the second device.

In the fifth aspect, the embodiments of the present disclosure provide a communication apparatus. The communication apparatus includes a measurement unit.

The measurement unit is configured to measure the first signal sent by each of at least one electronic tag, to obtain at least one first measurement result.

The measurement unit is further configured to measure the third signal sent by the second device, to obtain the third measurement result.

The third measurement result and the at least one first measurement result are used to determine position information of the second device.

In the sixth aspect, the embodiments of the present disclosure provide a communication apparatus. The communication apparatus includes a measurement unit and/or a communication unit.

The measurement unit is configured to measure the first signal sent by each of at least one electronic tag, to obtain at least one second measurement result. The at least one second measurement result is used to determine position information of the second device.

The communication unit is configured to send the third signal. The third signal is used for measurement performed by the first device to obtain the third measurement result, and the third measurement result is used for determining the position information of the second device in combination with at least one first measurement result obtained by measuring, by the first device, the first signal sent by each of the at least one electronic tag.

In the seventh aspect, the embodiments of the present disclosure provide a communication device. The communication device includes a processor and a memory.

The memory is configured to store a computer program.

The processor is configured to invoke and execute a computer program stored in the memory to perform the method of the first aspect, the second aspect or the third aspect.

In the eighth aspect, the embodiments of the present disclosure provide a computer storage medium. The computer storage medium stores one or more programs executable by one or more processors to implement the method of the first aspect, the second aspect or the third aspect.

In the ninth aspect, the embodiments of the present disclosure provide a chip. The chip includes a processor. The processor is configured to invoke and execute a computer program from a memory to implement the method of the first aspect, the second aspect, or the third aspect.

In the tenth aspect, the embodiments of the present disclosure provide a computer program product. The computer program product includes a computer storage medium storing a computer program. The computer program includes instructions executable by at least one processor that, when executed by the at least one processor, implement the method of the first aspect, the second aspect or the third aspect.

According to the eleventh aspect, the embodiments of the present disclosure provide a computer program. The computer program causes a computer to perform the method of the first aspect, the second aspect, or the third aspect.

In the embodiments of the present disclosure, the first electronic tag sends the first signal. The first signal is used for the first device to perform measurement to obtain the first measurement result or for the second device to perform measurement to obtain the second measurement result, and the first measurement result or the second measurement result is used for determining position information of the second device. In this way, the first device or the second device can measure the first signal sent by the first electronic tag, and the measurement result can be used to determine the position information of the second device, so that the position information of the second device can be determined by using the electronic tag, and the inaccuracy of positioning information obtained at a position with a poor network environment is reduced, thereby improving the accuracy of positioning by using the communication methods of the present disclosure.

### BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure.
FIG. 1 is a schematic diagram of an application scenario according to an embodiment of the present disclosure.
FIG. 2 is a schematic diagram of a zero power communication system.
FIG. 3 provides a schematic diagram of a back scattering communication principle.
FIG. 4 provides a schematic diagram of a circuit principle of resistive load modulation.
FIG. 5 provides a schematic diagram of a circuit principle of capacitive load modulation.
FIG. 6 is a schematic diagram of determining a target position based on a Time Difference Of Arrival (TDOA) method.
FIG. 7 is a schematic diagram of determining a target position based on a DownLink-Angel Of Departure (DL-AoD) method.
FIG. 8 is a schematic diagram of a method for positioning according to an embodiment of the present disclosure.
FIG. 9 is a schematic diagram of another method for positioning according to an embodiment of the present disclosure.
FIG. 10 is a schematic flowchart of a communication method according to an embodiment of the present disclosure.
FIG. 11 is a schematic flowchart of another communication method according to an embodiment of the present disclosure.
FIG. 12 is a schematic flowchart of yet another communication method according to an embodiment of the present disclosure.
FIG. 13 is a schematic flowchart of still another communication method according to an embodiment of the present disclosure.
FIG. 14 is a schematic diagram of periodically updating the positioning measurement result according to an embodiment of the present disclosure.
FIG. 15 is a schematic diagram of the structure and composition of the communication apparatus according to the embodiment of the present disclosure.
FIG. 16 is a schematic diagram of the structure and composition of another communication apparatus according to the embodiment of the present disclosure.
FIG. 17 is a schematic diagram of the structure and composition of yet another communication apparatus provided by the embodiment of the present disclosure;
FIG. 18 is a schematic structural diagram of a communication device according to an embodiment of the present disclosure.
FIG. 19 is a schematic structural diagram of a chip according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

The technical solutions described in the embodiments of the present disclosure may be arbitrarily combined as long as there is no conflict. In the description of the present disclosure, "multiple" means two or more unless specifically defined otherwise. In the embodiments of the present disclosure, the signal and the information may have the same meaning, or the signal may include or carry information or the like.

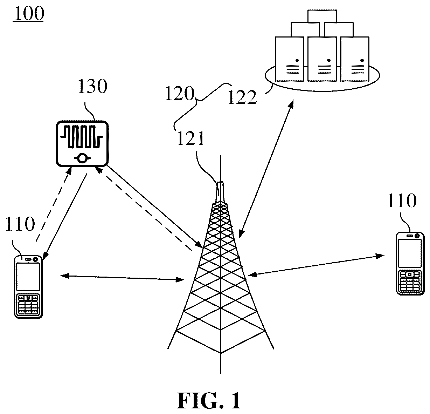

FIG. 1 is a schematic diagram of an application scenario according to an embodiment of the present disclosure. As illustrated in FIG. 1, the communication system 100 may include terminal devices 110, network devices 120, and a zero-power device 130. The network device 120 may communicate with the terminal device 110 through an air interface. Multi-service transmission is supported between the terminal device 110 and the network device 120. The zero-power device 130 may communicate with the network device 120 (which may be the access network device 121 in the network devices 120), and/or the zero-power device 130 may communicate with the terminal device 110.

Alternatively, the zero-power device 130 may harvest power from the environment to supply power to the zero-power device 130, thereby supporting the zero-power device 130 to perform at least one of the following: sending signal, performing calculation, storing information, or the like.

Alternatively, the zero-power device 130 may harvest power from the power supply signal sent by the terminal device 110 and/or the network device 120 (which may be the access network device 121 in the network devices 120), thereby supporting the zero-power device 130 to perform at least one of the following: sending a signal, performing calculation, storing information, or the like.

Alternatively, sending the signal by the zero-power device 130 may include sending the signal by the zero-power device 130 to the terminal device 110 and/or the network device 120 (which may be the access network device 121 in the network devices 120).

Alternatively, the power supply link and the communication link may be decoupled, for example, the zero-power device 130 receives the power supply signal from the network device 120 to obtain power, and sends the signal to the terminal device 110.

It should be understood that the embodiments of the present disclosure are only exemplarily described with reference to the communication system 100, but the embodiments of the present disclosure are not limited thereto. That is, the technical solutions of the embodiments of the present disclosure may be applied to various communication systems, such as a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Universal Mobile Telecommunication System (UMTS), a Wireless Local Area Network (WLAN), a Wireless Fidelity (WiFi), a LTE Time Division Duplex (TDD), a Universal Mobile Telecommunication System (UMTS), an Internet of Things (IoT) system, a Narrow Band Internet of Things (NB-IoT) System, an enhanced Machine-Type Communications (eMTC) system, or a future communication system (for example, a 6G communication system, a 7G communication system), etc.

The network device 120 in the embodiments of the present disclosure may include an access network device 121 and/or a core network device 122. The access network device may provide communication coverage for a particular geographic area, and may communicate with the terminal device 110 (for example, a User Equipment (UE)) located within that coverage area.

The terminal device in the present disclosure may be a device having a wireless communication function, and may be deployed on land, which includes an indoor or outdoor device, a handheld device or a vehicle-mounted device. The terminal device may also be deployed on the water (such as on ships, etc.). The terminal device may also be deployed in the air (for example, on in an aircraft, balloon and satellite, etc.). The terminal device in the present disclosure may be referred to as a User Equipment (UE), a Mobile Station (MS), a Mobile Terminal (MT), a subscriber unit, a subscriber station, a mobile radio station, a remote station, a remote terminal, a mobile device, a user terminal, a terminal, a wireless communication device, a user agent, or a user device. The terminal device may include one or a combination of at least two of the following: a reader/writer, an Internet of Things (IoT) device, a satellite terminal, a Wireless Local Loop (WLL) station, a Personal Digital Assistant (PDA), a handheld device with a wireless communication function, a computing device or other processing device connected to a wireless modem, a server, a mobile phone, a tablet computer (Pad), a computer with a wireless transceiver function, a handheld computer, a desktop computer, a PDA, a portable media player, a smart speaker, a navigation device, a wearable device such as a smart watch, smart glasses, a smart necklace, etc., a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a vehicle in a Vehicle-to-Everything system, a vehicle-mounted device, a vehicle-mounted module, a wireless modem, a handheld device, a Customer Premise Equipment (CPE), a smart home appliances, etc.

Alternatively, the terminal device 110 may be any terminal device, which includes, but is not limited to, a terminal device connected to the network device 120 or another terminal device via a wired or wireless connection.

Alternatively, the terminal device 110 may be used for Device to Device (D2D) communication.

The access network device 121 may include one or a combination of at least two of the following: an Evolutional Node B (eNB or eNodeB) in a Long Term Evolution (LTE) system, a Next Generation Radio Access Network (NG RAN) device, a base station (gNB) in the NR system, a small station, a micro station, a wireless controller in a Cloud Radio Access Network (CRAN), an access point in Wireless-Fidelity (Wi-Fi), a transmission reception point (TRP), a relay station, an access point, a vehicle-mounted device, a wearable device, a hub, a switch, a bridge, a router, a network device in the future evolutional Public Land Mobile Network (PLMN), etc.

The core network device 122 may be a 5G Core (5GC) device, and may include one or a combination of at least two of the following: an Access and Mobility Management Function (AMF), an Authentication Server Function (AUSF), a User Plane Function (UPF), a Session Management Function (SMF), a Location Management Function (LMF), and a Policy Control Function (PCF). In other embodiments, the core network device may also be an Evolved Packet Core (EPC) device in the LTE network, for example, a Session Management Function + Core Packet Gateway (SMF + PGW-C) device. It should be understood that SMF+PGW-C may simultaneously achieves the functions that can be achieved by the SMF and PGW-C. During the evolution of the network, the core network device 122 may also be called other names or form a new network entity by dividing the functions of the core network, which is not limited by the embodiments of the present disclosure.

The various functional units in the communication system 100 may also communicate with each other by establishing connections via the next generation network (NG) interface.

For example, the terminal device establishes an air interface connection with the access network device via the NR interface for transmission of user-plane data and control-plane signaling. The terminal device may establish a control-plane signaling connection to the AMF via a NG interface 1 (referred to as N1 for short). The access network device, such as a gNB, may establish a user-plane data connection to the UPF via a NG interface 3 (referred to as N3 for short). The access network device may establish a control-plane signaling connection to the AMF via a NG interface 2 (referred to as N2 for short). The UPF may establish a control-plane signaling connection to the SMF via a NG interface 4 (referred to as N4 for short). The UPF may interact with the data network for user-plane data via a NG interface 6 (referred to as N6 for short). The AMF may establish a control-plane signaling connection to the SMF via a NG interface 11 (referred to as N11 for short). The SMF may establish a control plane signaling connection with the PCF via a NG interface 7 (referred to as N7 for short).

FIG. 1 exemplarily illustrates one base station, one core network device, and two terminal devices. In an embodiment, the wireless communication system 100 may include multiple base stations and another number of terminal devices may be included within the coverage area of each base station, which is not limited in the embodiments of the present disclosure.

It should be noted that FIG. 1 merely exemplarily illustrates the system to which the present disclosure is applied, and of course, the method in the embodiments of the present disclosure may also be applied to other systems. Terms "system" and "network" in the present disclosure may usually be interchanged in the present disclosure. In the present disclosure, the term "and/or" is only an association relationship describing associated objects and represents that three relationships may exist. For example, A and/or B may represent three conditions: i.e., independent existence of A, existence of both A and B, and independent existence of B. In addition, character "/" in the present disclosure usually represents that previous and next associated objects form an "or" relationship. It is also to be understood that the term "indication" in embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It is also to be understood that the term "correspondence" in embodiments of the present disclosure may indicate a direct or indirect correspondence between the two elements, or may indicate an association between the two elements, or may indicate a relationship of indicating and being indicated, configuring and being configured, etc. It is also to be understood that the term "predefined", "specified by protocol", "predetermined" or "predefined rules" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to those defined in a protocol. It is also to be understood that in embodiments of the present disclosure, "protocol" may refer to a standard protocol in the field of communication, which may include, for example, an LTE protocol, NR protocol and relevant protocol applied in the future communication system, which is not limited in the present disclosure.

To make the technical solutions of the embodiments of the present disclosure to be understood better, the relevant technology of the embodiments of the present disclosure is described below. The following relevant technology as optional solutions may be combined with the technical solutions of the embodiments in any way, and shall fall within the scope of protection of the present disclosure.

The application of the zero-power devices is increasingly widespread. The technology used by the zero-power devices may be Radio Frequency Identification (RFID) technology, which is a technology that uses the spatial coupling of wireless Radio Frequency signals to realize contactless automatic transmission and identification of tag information. RFID tags are also called "Radio Frequency tags" or "electronic tags (TAGs)". Alternatively, the types of the electronic tag classified according to different power supply modes may include active electronic tag, inactive electronic tag, and semi-passive electronic tag. Alternatively, the active electronic tag, also known as a voluntary electronic tag, means that the power for the operation of the electronic tag is provided by the battery. The battery, memory and antenna together form the active electronic tag. Different from the activation mode of passive radio frequency, the information is sent through the set frequency band before the battery is replaced. Alternatively, the inactive electronic tag, also known as the passive electronic tag, does not support a built-in battery. When the inactive electronic tag approaches the reader/writer, the electronic tag antenna in a near-field range formed by radiation from the reader/writer antenna generates an induced current through electromagnetic induction, and the induced current drives the electronic tag chip circuit. The chip circuit sends the identifier information stored in the tag to the reader/writer through the electronic tag antenna. Alternatively, the semi-passive electronic tag or the semiactive electronic tag inherits the advantages of the inactive electronic tag, such as small volume, light weight, low price and long service life. The built-in battery only supply power for few circuits in the chip when the reader/writer does not access. Only when the reader/writer accesses, the built-in battery supplies power to the RFID chip, so as to increase the reading-writing distance of the tag and improve the reliability of communication.

The RFID is a wireless communication technology. The most basic RFID system is composed of two parts: electronic tag and reader/writer. The electronic tag is composed of coupled components and chips. Each electronic tag has a unique electronic code and is placed on the measured target to achieve the purpose of marking the target object. The reader/writer may not only read the information on the electronic tag, but also write the information on the electronic tag, and simultaneously provide the electronic tag with the energy needed for communication.

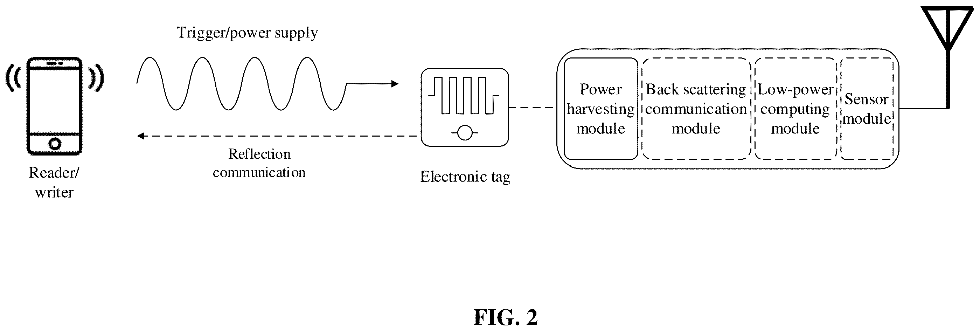

FIG. 2 is a schematic diagram of a zero power communication system. As illustrated in FIG. 2, after the electronic tag enters the electromagnetic field, it receives the radio frequency signal sent by the reader/writer. The inactive electronic tag or the passive electronic tag uses the power obtained by the electromagnetic field generated in the space, that is, the electromagnetic field in the space can trigger the electronic tag to start and/or supply power to the electronic tag (trigger/power supply). In this way, the electronic tag may perform reflective communication (also known as reverse communication or back scattering communication). For example, the electronic tag may transmit part or all of the information stored in the electronic tag through reflective communication (also known as reverse communication), and the reader/writer reads and decodes the information to identify the electronic tag.

The electronic tag may include at least one of the following: a power harvesting module, a back scattering communication module, a low-power computing module, or a sensor module. The power harvesting module is used for harvesting electromagnetic field power in space. The back scattering communication module is used for transmitting the back scattering signal to the reader/writer that sends the signal. The low-power computing module is used for performing computing operations. The sensor module is used for collect information and store the collected information.

One of the key technologies of the zero power communication system is back scattering communication. The zero-power device (i.e. electronic tag) receives the carrier signal sent by the reader/writer, harvests power through the Radio Frequency (RF) power harvesting module, and then supplies power to at least one of the back scattering communication module, the low-power computing module and the sensor module. The back scattering communication module may modulate the incoming signal and perform back scattering.

Alternatively, the electronic tag may actively transmit signals. Alternatively, the electronic tag may not actively transmit signals, and realize back scattering communication by modulating the incoming signal. Alternatively, the electronic tag may not rely on the conventional active power amplifier transmitter, and simultaneously use a low-power computing unit, thereby greatly reducing hardware complexity. Alternatively, the electronic tag may be combined with power harvesting to enable battery-free communication.

Alternatively, when the zero-power device performs back scattering communication, the frequency of the back scattering signal may be consistent with the incoming signal, or a frequency shift occurs. When the frequency shift occurs, the offset amount of each device may be the same or different.

Alternatively, when the zero-power device performs back scattering communication, the back scattering signal may be triggered immediately after receiving the incoming signal, or the back scattering communication may be performed after a certain time offset. When there is a time offset, the time offset for reflecting the signal of each device may be the same or different.

Alternatively, when the zero-power device performs back scattering communication, the spatial characteristics of the back scattering signal may be set as needed, for example, a greater antenna gain in a certain direction may be achieved through the antenna array and there is a less gain in other directions, so that the power of the signal is concentrated in a certain spatial direction.

Alternatively, the zero-power device may also perform information modulation, which is called load modulation, when backscattering the signal. Load modulation is a method often used by electronic tags to transmit data to the reader/writer. Load modulation completes the modulation process by adjusting the electrical parameters of the oscillation circuit of the electronic tag according to the beat of the data stream to cause the magnitude and phase of the impedance of the electronic tag to change accordingly. Load modulation technology mainly includes resistive load modulation and capacitive load modulation.

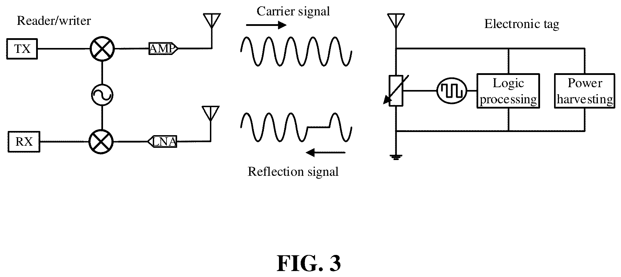

FIG. 3 provides a schematic diagram of the principle of back scattering communication. As illustrated in FIG. 3, the transmitting port (TransmitterX, TX) of the reader/writer (also called back scattering reader/writer) obtains the transmitted signal and sends the carrier signal through the antenna after amplification of the AMPlifier (AMP), the electronic tag (also called back scattering tag) receives the carrier signal, performs power harvesting, logic processing and modulation, and then sends the reflection signal to the reader/writer. The reader/writer amplifies the reflection signal through a Low Noise Amplifier (LNA) and outputs it to the receiving port (ReceiveX, RX).

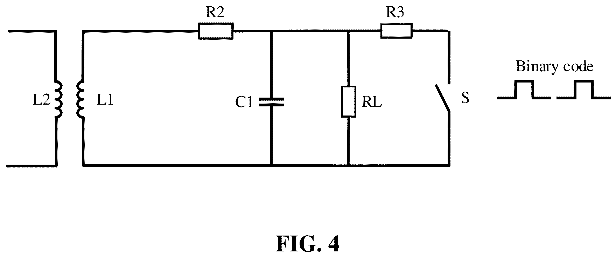

FIG. 4 provides a schematic diagram of a circuit principle of resistive load modulation. As illustrated in FIG. 4, the coil L2 of a master device (such as a reader/writer) and the coil L1 of a secondary device (such as an electronic tag) are coupled by a magnetic field. The load R3 (also called a load modulation resistor) of the secondary device is connected in parallel with a load modulation resistor RL. The load R3 is connected and disconnected according to the clock of the data stream, and the on-off of the switch S is controlled by binary code. The load of the secondary coil is changed by controlling whether the load modulation resistor is connected to the resonant circuit (which consists of L1, C1 and R2, or consists of L1 and C1 in other embodiments) of the secondary coil, and then the load of the master device is affected by magnetic field coupling, thus realizing the effect of load modulation.

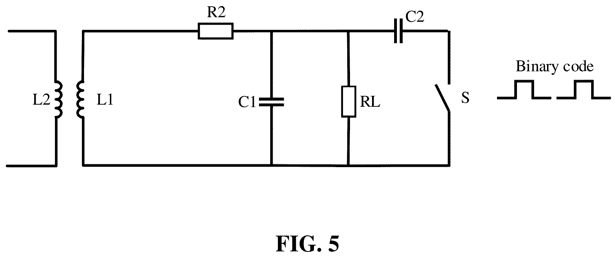

FIG. 5 provides a schematic diagram of the circuit principle of capacitive load modulation. As illustrated in FIG. 5, the coil L2 of the master device (such as a reader/writer) and the coil L1 of the secondary device (such as an electronic tag) are coupled by a magnetic field. The load C2 (also called a load modulation capacitor) of the secondary device is connected in parallel with a load modulation resistor RL. The load C2 is connected and disconnected according to the clock of the data stream, and the on-off of the switch S is controlled by binary code. The load of the secondary coil is changed cy controlling whether the load modulation resistor is connected to the resonant circuit (which consists of L1, C1 and R2, or consists of L1 and C1 in other embodiments) of the secondary coil, and then the load of the master device is affected by magnetic field coupling, thus realizing the effect of load modulation.

In order to support various requirements such as public safety services, emergency warning, navigation and object finding, and asset management, etc., wireless positioning technology has also attracted extensive attention and research. Wireless positioning technology may be used for performing positioning based on various positioning methods such as timing-based, angle-based or phase-based used in systems such as Wireless Fidelity (WiFi), Bluetooth, and 4G/5G cellular communications. Alternatively, the timing-based method may include a Time Difference Of Arrival (TDOA)-based method and/or a Round-Trip Time (RTT)-based method. Alternatively, the angle-based method may include a method based on a horizontal Angle Of Arrival (AOA) and/or a vertical AOA and/or a method based on a horizontal Angel Of Departure (AOD) and/or a vertical AOD.

In the timing measurement, the distance between the positioning target and a reference node is calculated by measuring the arrival time or the arrival time difference of the reference signal, and then the position of the target is calculated according to the distances between the positioning target and multiple reference nodes.

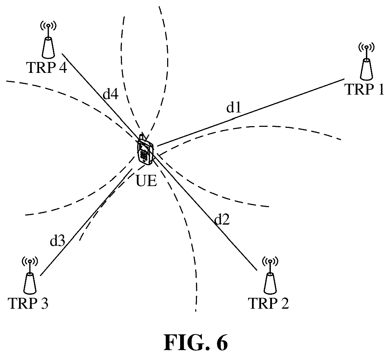

FIG. 6 is a schematic diagram of determining the target position based on the TDOA method. As illustrated in FIG. 6, the positioning target (UE) may determine the distances d1, d2, d3, and d4 between the respective TRPs and the UE according to the arrival time differences of the signal TDOAs of multiple reference nodes (corresponding to TRP1, TRP2, TRP3, and TRP4), and then the corresponding hyperbolas may be determined. The intersection of these hyperbolas is the estimated position of the positioning target. Alternatively, the algorithm for solving the positioning target may be a Multilateration solving, for example, a Taylor expansion method or a Chan algorithm may be used for solving, and the specific solution algorithm depends on the implementation of the manufacturer.

In the angle measurement, an antenna array is used to determine the sending /arrival angles of signals, and then the angles between the positioning target and multiple reference nodes are used to calculate the position of the positioning target.

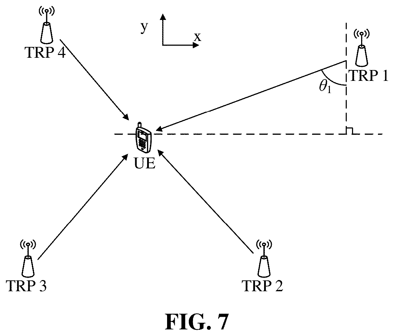

FIG. 7 is a schematic diagram of determining the target position based on the DL-AoD method. As illustrated in FIG. 7, DL-AoD is short for the DownLink-Angle Of Departure, and the distance between TRP i (i = 1, 2, 3, 4) and the positioning target (UE) is projected on the x-axis and y-axis as two perpendicular sides of a right-angled triangle, respectively. Based on the trigonometric function, a relationship between the two sides and the DL-AoD *θᵢ* (*θ*₁ is shown in FIG. 7) is *xᵢ - x_{UE} =* (*yᵢ - y_{UE}*) × *tanθᵢ*. Multiple constraint equations may be obtained based on multiple TRPs. The coordinates (*x_{UE}, y_{UE}*) of the positioning target may be obtained by solving the equations .

The accuracy of timing measurement depends on the bandwidth of the reference signal, and the greater the bandwidth is, the higher the accuracy is. The angle measurement depends on the arrangement of the antenna array, and the more antennas is, the more accurate the angle is. However, due to the zero power/extremely low power requirement of the electronic tag, sufficient signal bandwidth and antenna configuration may not be able to be supported, so it is necessary to study how to implement positioning in the zero-power system, especially for scenarios where a large number of zero power tags are deployed.

In order to facilitate understanding of the technical solutions of the embodiments of the present disclosure, the technical solutions of the present disclosure will be described in detail below with reference to specific examples. The above relevant technology as optional solutions may be combined with the technical solutions of the embodiments in any way, and shall fall within the scope of protection of the embodiments of the present disclosure. The embodiments of the present disclosure include at least part of the following contents.

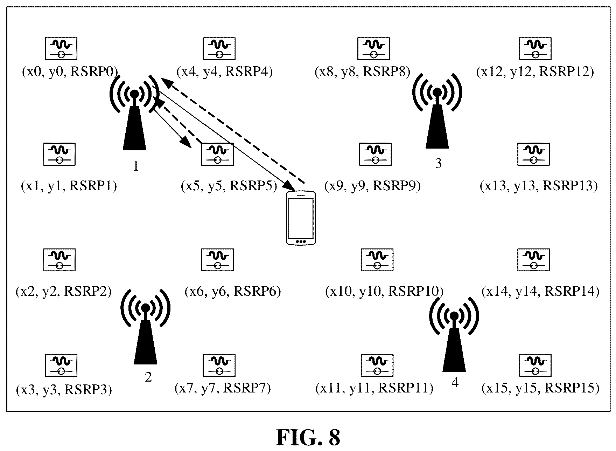

FIG. 8 is a schematic diagram of a method for positioning according to an embodiment of the present disclosure. As illustrated in FIG. 8, some reference tags (also called electronic tags) and some network devices (network devices 1-4) are fixed at some set positions. Exemplarily, the network device 1 may broadcast the second signal(s), and at least part of the reference tags (for example, the reference tags 1-16) at fixed positions may send signals (which may be back scattering signal) to the network device 1. The coordinates corresponding to the reference tags 1-16 and the measurement results corresponding to the signals received by the network device 1 may be (x0, y0, RSRP0), (x1, y1, RSRP1),..., (x15, y15, RSRP15), respectively. In FIG. 8, it is exemplarily illustrated that a reference tag at position (x5, y5) sends a signal to the network device 1. The target device (i.e., the second device in the present disclosure) may send a signal (which may be the third signal in other embodiments) to the network device 1. Based on the measurement results of the back scattering signals, the network device 1 may select reference tags that are closer to the target device (such as the reference tags at positions (x5, y5), (x6, y6), (x9, y9), (x10, y10)). Based on the positions of the reference tags (x5, y5), (x6, y6), (x9, y9), (x10, y10), the position information of the target device is determined. Alternatively, the network device 1 may use a clustering algorithm to determine reference tags that are closer to the target device. In other embodiments, if there is a reference tag at the position of the target device, the target device is closest to the position of the reference tag, and the position information of the target device may be determined based on the position information of one reference tag.

Alternatively, in any one embodiment of the present disclosure, the measurement parameter or measurement variable corresponding to the measurement result (including the following first measurement result or second measurement result) includes at least one of the following: Reference Signal Received Power (RSRP), Reference Signal Received Quality (RSRQ), Received Signal Strength Indicator (RSSI), Signal to Interference plus Noise Ratio (SINR), Received Signal Code Power (RSCP), Signal Noise Ratio (SNR), phase, phase difference, Line Of Sight (LOS) indication, Non Line Of Sight (NLOS) indication, probability of LOS diameter, probability of NLOS diameter, etc.

In FIG. 8, there are positioning nodes (i.e., network devices) that may be used for at least one of power supply, positioning measurement, positioning calculation, etc. In FIG. 8, signals may be sent through the positioning nodes, after the signals are backscattered by the reference tags, the signals are returned to the positioning node for measurement. Similarly, the target device (the device that needs to determine the position information) may also perform the backscattering on the signals sent by the positioning nodes, and then the signals are measured by the positioning nodes. The positioning node compares the measurement result of the target device with the measurement results of other reference tags, and uses clustering algorithm to select the reference tags that are closest to the target device, so as to determine the position of the target device.

Alternatively, the position information of the reference tags may be directly carried in the backscattered modulation information (i.e., backscattered information), or may be associated with the tag IDs one by one at the time of network deployment, so that the position information may be implicitly indicated only by carrying the tag ID information in the back scattered modulation information.

Alternatively, the reference tag does not require a built-in battery and may work for a long time by means of power harvesting. There is also no need for complex communication or computing modules. Therefore, the cost of reference tags will be very low, and a large number of deployments may be carried out indoors, such as placing a reference tag every 1m or even 0.5 m. Therefore, it has the characteristics of low cost and high accuracy, and also makes up for the shortcomings of some existing positioning methods (such as Global Navigation Satellite System (GNSS), cellular TDOA, etc.) in indoor scenarios.

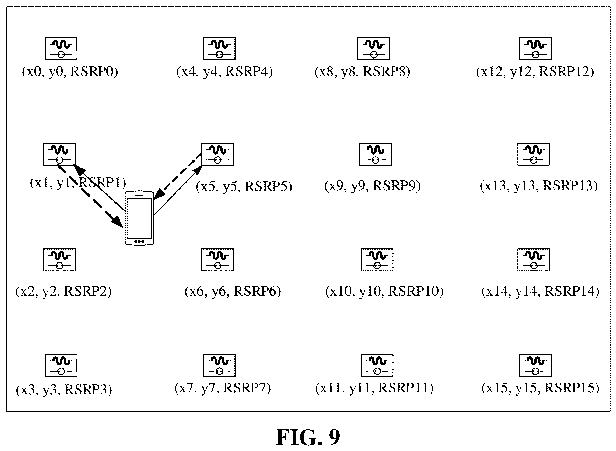

FIG. 9 is a schematic diagram of another method for positioning according to an embodiment of the present disclosure. As illustrated in FIG. 9, some reference tags (also called electronic tags) are fixed at some set positions. Exemplarily, the target device may broadcast a signal, and at least part of reference tags (for example, reference tags 1-16) at the fixed positions may send signals (which may be back scattering signals) to the target device. The coordinates corresponding to the reference tags 1-16 and the measurement results corresponding to the signals received by the target device may be (x0, y0, RSRP0), (x1, y1, RSRP1),..., (x15, y15, RSRP15), respectively. In FIG. 9, it is exemplarily illustrated that reference tags at positions (x1, y1) and (x5, y5) send signals to the target device. In this way, the target device may select the position information of the one or more reference tags with the strongest signals, and determine the position information of the target device according to the position information of the selected one or more reference tags. For example, the target device determines the position information of the target device based on the position information of the reference tags at the positions (x1, y1), (x2, y2), (x5, y5) and (x6, y6).

Alternatively, any one of the reference tags in FIG. 8 and FIG. 9 may be a zero-power device or may be a non-zero-power device. Alternatively, the target device may be a non-zero-power device or a zero-power device.

Alternatively, in any one embodiment of the present disclosure, the zero-power device may be any one electronic tag mentioned in other embodiments, for example, the zero-power device may include one of the following: an inactive electronic tag, a semi-inactive electronic tag, and an active electronic tag. Alternatively, in any one embodiment of the present disclosure, the non-zero-power device may include a terminal device.

Compared to the embodiment illustrated in FIG. 8, in FIG. 9, no additional positioning nodes (i.e., network devices) are required, and the deployment is simple and cost is low.

Alternatively, in any one embodiment of the present disclosure, a device that sends an incoming signal to the zero-power device may be referred to as a signal source. In FIG. 8, the signal source may be network devices or a target device, and in FIG. 9, the signal source may be a target device.

Based on the characteristics of battery-free, maintenance-free, low-cost of the zero-power device, it is very suitable for scenarios with large-scale deployment and special needs, such as goods in logistics, animals in livestock farms, key devices in high temperature and high pressure environments, etc. A more feasible positioning solution is to fix the zero-power tags at known positions as references. Considering the transformation of the wireless environment, the measurement result of the back scattering signal of each reference tag may also exhibit certain fluctuations. For example, if an obstruction is added between the reference tag and the signal source, the corresponding RSRP measurement result will be significantly reduced. In this case, if the previously measured RSRP results are still used for positioning, it will cause a large error. Therefore, the measurement results corresponding to the reference tags need to be updated in time.

Alternatively, in any one embodiment of the present disclosure, any one electronic tag (including the first electronic tag) may be an RFID tag, a Passive IoT tag, or an Ambient IoT tag.

Alternatively, in any one embodiment of the present disclosure, the first device may include one of the following: an access network device, a core network device, a terminal device, a gateway, and an AccessPoint (AP) in a WLAN network.

Alternatively, in any one embodiment of the present disclosure, the second device may include one of the following: a terminal device, an electronic tag, and an access network device.

Alternatively, in any one embodiment of the present disclosure, the positioning control device may include one of the following: an LMF, a network element newly defined by the protocol, and any one network element listed above. The network element may have positioning control function.

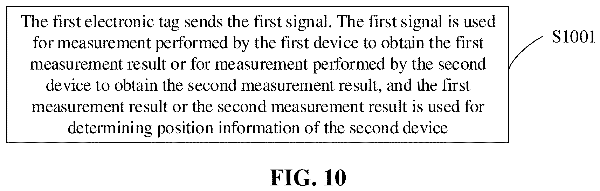

FIG. 10 is a schematic flowchart of a communication method according to an embodiment of the present disclosure. As illustrated in FIG. 10, the method is applied to the first electronic tag. The method includes the following operation.

In operation S1001, the first electronic tag sends the first signal. The first signal is used for measurement performed by the first device to obtain the first measurement result or for measurement performed by the second device to obtain the second measurement result, and the first measurement result or the second measurement result is used for determining position information of the second device.

[**0102]** Alternatively, the first signal may also be referred to as a back scattering signal, a positioning reference signal, or a positioning signal.

[**0103]** Alternatively, in any one embodiment of the present disclosure, any one electronic tag (including the first electronic tag) may be one of the following: an inactive electronic tag, a semi-inactive electronic tag, or an active electronic tag.

[**0104]** Alternatively, the contents carried in the first signals sent by different electronic tags may be the same, different, or partially the same. Alternatively, the operation of sending the first signal by any one electronic tag may include that any one electronic tag broadcasts the first signal, unicasts the first signal, or multicasts the first signal.

[**0105]** Alternatively, any one electronic tag may actively send the first signal. For example, any one electronic tag may send the first signal according to preconfigured information. Alternatively, any one electronic tag may send the first signal periodically, or aperiodically, or once. Alternatively, the preconfigured information may be information preconfigured and stored in any one electronic tag, or, the first device, the second device, or the positioning control device configures the information to any one electronic tag, and any one electronic tag stores the configuration.

[**0106]** Alternatively, any one electronic tag may send the first signal passively, or any one electronic tag may send the first signal by backscattering. For example, any one electronic tag may send the first signal in a case that the second signal(s) sent by the first device or the third signal sent by the second device is received. Alternatively, in a case that the second signal(s) or the third signal ise received by any one electronic tag, any one electronic tag may send the first signal periodically or aperiodically or once.

[**0107]** Alternatively, the first signal sent by any one electronic tag may be included in the positioning reference signal, or may be carried in the positioning reference signal.

[**0108]** Alternatively, the first signal sent by any one electronic tag may include a signal obtained by demodulating and re-modulating the received second signal(s). Alternatively, the modulation manner of the signal obtained by re-modulation may be simpler than the modulation manner of the second signal(s), or the modulation method of the signal obtained by re-modulation may be the same as the modulation manner of the second signal(s). Exemplarily, taking the modulation manner of the signal obtained by re-modulation being simpler than the modulation manner of the second signal(s) as an example, in a case that the second signal(s) is received by any one electronic tag, after demodulating the second signal(s), the demodulated signal may be reflected. Alternatively, in the demodulated signal, any one electronic tag may modulate information obtained every preset bits or every preset duration, thereby realizing reflection of the second signal(s).

[**0109]** Alternatively, the first signal sent by any one electronic tag may include at least one of the following: an identifier of any one electronic tag or position information of any one electronic tag. Alternatively, the identifier of any one electronic tag may include at least one of the following: a physical identifier of any one electronic tag, a logical identifier of any one electronic tag, a group identifier corresponding to any one electronic tag, a temporary identifier of any one electronic tag, an Electronic Product Code (EPC) of any one electronic tag, or an identifier of any one electronic tag within a group. Alternatively, the position information of any one electronic tag includes at least one of the following: absolute position information of any one electronic tag, relative position information of any one electronic tag with respect to any one device or object other than the any one electronic tag, two-dimensional and/or three-dimensional coordinate information of any one electronic tag, position identifier information of any one electronic tag, and latitude and longitude information of any one electronic tag.

[**0110]** Alternatively, any one electronic tag may send the first signal on the first time domain resource and/or the first frequency domain resource. Alternatively, the first time domain resource and/or the first frequency domain resource may be pre-configured by any one electronic tag, or may be configured by the first device, the second device, or the positioning control device to any one electronic tag, or may be agreed by a protocol.

[**0111]** In an embodiment of the present disclosure, the first electronic tag sends the first signal. The first signal is used for measurement performed by the first device to obtain the first measurement result or for measurement performed by the second device to obtain the second measurement result, and the first measurement result or the second measurement result is used for determining position information of the second device. In this way, the first device or the second device may measure the first signal sent by the first electronic tag, and the measurement result may be used to determine the position information of the second device, so that the position information of the second device can be determined by using the electronic tag, and the inaccuracy of positioning information obtained at a position with a poor network environment is reduced, so that the accuracy of positioning can be improved by using the communication method of the present disclosure.

[**0112]** In some embodiments, the operation that the first electronic tag sends the first signal includes: the first electronic tag sends the first signal according to the first period.

[**0113]** Alternatively, the operation that the first electronic tag sends the first signal includes: the first electronic tag sends the first signal once every first period.

[**0114]** Alternatively, any one electronic tag may send the first signal once every first period. Alternatively, the first periods in which different electronic tags send the first signal may be the same or different.

[**0115]** Alternatively, within one region or within one group, different electronic tags use different time domain resources and/or frequency domain resources for sending the first signal.

[**0116]** Alternatively, the first period in which any one electronic tag sends the first signal is constant. Alternatively, the first period in which any one electronic tag sends the first signal is variable. For example, the first period may be determined according to at least one of the following: the remaining power amount of any one electronic tag, the power conversion rate of any one electronic tag, the power harvesting efficiency of any one electronic tag, and the transmission power/energy of any one electronic tag.

[**0117]** Alternatively, the first period in which any one electronic tag sends the first signal may be pre-configured by any electronic tag, or may be configured by the first device or the second device or the positioning control device to any one electronic tag, or may be agreed by a protocol.

[**0118]** In some embodiments, the method further includes: the first electronic tag receives the second signal(s) according to the second period. The second period is less than or equal to the first period.

[**0119]** Alternatively, the method further includes: the first electronic tag receives the second signal(s) sent by the first device once every second period. The second period is less than or equal to the first period.

[**0120]** Alternatively, the second signal(s) may include a power supply signal. Alternatively, the second signal(s) may be the power supply signal.

[**0121]** Alternatively, the second period may be equal to the first period. Alternatively, the second period may be less than the first period. For example, the first period may be the second period multiplied by N, and N is an integer greater than or equal to 2. Exemplarily, the first period may be the second period multiplied by 2, 3, 4, or 5, etc.

[**0122]** Alternatively, the second signal(s) may be broadcast, multicast, or unicast by the first device.

[**0123]** Alternatively, any one electronic tag receives the second signal(s) once every second period. Alternatively, the second period corresponding to any one electronic tag may be pre-configured by any one electronic tag, or may be configured by the first device, the second device, or the positioning control device to any one electronic tag, or may be agreed by a protocol.

[**0124]** Alternatively, any one electronic tag may receive the second signal(s) on the second time domain resource and/or the second frequency domain resource.

[**0125]** Alternatively, in a case that the second signal(s) are received once by any one electronic tag, the any one electronic tag may actively send the first signal, or take a reflection signal that the second signal(s) is directly reflected as the first signal, for the measurement performed by the first device and/or the second device, or may determine the first signal according to the second signal(s), and send the first signal through a back scattering manner, for the measurement performed by the first device and/or the second device. Alternatively, the operation that the first signal is determined according to the second signal(s) may include the identifier of any one electronic tag and/or position information of any one electronic tag is added to the information carried by the second signal(s) to obtain the first signal, or part or all of the information carried by the second signal(s) is deleted, and the identifier of any one electronic tag and/or position information of any one electronic tag is added.

[**0126]** In some embodiments, the second signal(s) include the third signal and/or the fourth signal.

[**0127]** The third signal is used for at least one of: identifying the first electronic tag, waking up the first electronic tag, powering the first electronic tag.

[**0128]** The fourth signal is used for the first electronic tag to send the first signal.

[**0129]** Alternatively, the information included or carried by the third signal may be the same as the information included or carried by the fourth signal. Alternatively, the information included or carried by the third signal may be different from the information included or carried by the fourth signal.

[**0130]** Alternatively, the second signal(s) include the third signal and the fourth signal. The third signal may be partial signal(s) of the second signal(s) first received by the first electronic tag, and the fourth signal may be signal(s), other than the partial signal(s), in the second signal(s).

[**0131]** Alternatively, taking the information included or carried by the third signal being the same as the information included or carried by the fourth signal, the second signal(s) includes N signals, the information included or carried by each of the N signals is specific information, the first M signals among the N signals are third signal(s), and the last N-M signals among the N signals are fourth signal(s). N is an integer greater than or equal to 2, and M is an integer greater than or equal to 1.

[**0132]** Alternatively, any one electronic tag receives the second signal(s) sent by the first device once every second period. Alternatively, any one electronic tag receives the second signal(s) sent by the first device once every second period within the second duration of each second period. Within the second duration, the partial signal(s) firstly received by the any one electronic tag are used for at least one of the following: identifying of the any one electronic tag, waking up the any one electronic tag, or powering the any one electronic tag. The signal(s), other than the partial signal(s), in the second signal(s) are used for any one of the electronic tags to send the first signal.

[**0133]** Alternatively, the second duration corresponding to receiving the second signal(s) may be preconfigured by any one electronic tag, or may be configured by the first device, the second device, or the positioning control device to any one electronic tag, or may be agreed by a protocol.

[**0134]** Alternatively, in a case that the second signal(s) include multiple signals (for example, includes the third signal(s) and the fourth signal(s)), the multiple signals in the second signals may be sent periodically or aperiodically. Alternatively, the partial signal(s) firstly received by the first electronic tag may be one or more second signals. Alternatively, the signal(s), other than the partial signal(s), in the second signals may be one or more signals.

[**0135]** Alternatively, the signal(s), other than the partial signal(s), in the second signal(s) may be one or more second signals. Alternatively, any one electronic tag may send the first signal in response to one or more second signals, or any one electronic tag may directly reflect the second signal with the highest quality among the one or more second signals, and the reflection signal may be the first signal, or any one electronic tag may determine the first signal based on the one or more second signals, and perform backscattering on the first signal. For example, any one electronic tag may determine the first signal according to the second signal with the highest quality among one or more second signals.

[**0136]** Alternatively, different electronic tags may start to receive the second signal(s) at the same time or different times. For example, an electronic tag close to the first device starts to receive the second signal(s) earlier, and an electronic tag far away from the first device starts to receive the second signal(s) later. The reception time difference caused by distance should be very little, for example less than 1 us. If the second signal(s) is sent by unicasting, coordination may be performed by the network device. For example, the second signal(s) is sent at time t1, which is specifically used for the electronic tag 1 (for example, carrying the ID information of the target electronic tag (that is, the electronic tag 1)). After receiving the second signal(s), the electronic tag 1 will send the first signal to the network, and the other electronic tags will not process after receiving the second signal(s). In this case, different electronic tags are triggered at different moments.

[**0137]** In some embodiments, the second period is equal to the first period.

[**0138]** The operation that the first electronic tag sends the first signal according to the first period includes: the first electronic tag sends the first signal according to the first period every time the second signal(s) is received.

[**0139]** Alternatively, in a case that the first electronic tag receives the second signal(s) sent by the first device once every second period, the first electronic tag sends the first signal once every first period.

[**0140]** Alternatively, any one electronic tag may send the first signal once every time the second signal(s) is received. In this way, any one electronic tag sends the first signal every time the second signal(s) is received.

[**0141]** In some embodiments, the operation that the first electronic tag sends the first signal, according to the first period, every time the second signal(s) is received includes: the first electronic tag sends the first signal, according the first period, at a time interval of the first duration starting from a beginning time or an end time of receiving the second signal(s), every time the second signal(s) is received.

[**0142]** The first duration is associated with the first electronic tag, or the first duration is determined according to an identifier of the first electronic tag.

[**0143]** Alternatively, in a case that the first electronic tag receives the second signal(s) sent by the first device once every second period, for the terminal device, the first electronic tag sends the first signal once, every first period, after the time interval of the first duration starting from a beginning time or an end time of receiving the second signal(s).

[**0144]** Alternatively, the first durations corresponding to different electronic tags may be the same or different. Alternatively, in a case that the first durations corresponding to different electronic tags are different, the interference of sending the first signal by different electronic tags can be reduced. Exemplarily, within one region or within one group, different electronic tags correspond to different first durations.

[**0145]** Alternatively, the first duration corresponding to any one electronic tag may be preconfigured by the any one electronic tag, or may be configured by the first device, the second device, or the positioning control device to the any one electronic tag, or may be agreed by a protocol.

[**0146]** Alternatively, the first duration corresponding to any one electronic tag may be associated with the any one electronic tag, so that different electronic tags may correspond to different first durations.

[**0147]** Alternatively, the first duration corresponding to any one electronic tag may be determined according to the identifier of the any one electronic tag. For example, the first duration corresponding to any one electronic tag may be obtained by dividing a numerical value corresponding to an identifier of the any one electronic tag by a preset numerical value. Alternatively, the preset numerical value may be the maximum numerical value of the numerical values corresponding to the identifiers of all electronic tags, or may be the maximum numerical value of the numerical values corresponding to the identifiers of all electronic tags in one group or one region.

[**0148]** Alternatively, in another embodiment, in a case that the first electronic tag receives the second signal(s) sent by the first device once every second period, the first electronic tag sends the first signal once every first period at a target frequency domain position/target frequency. The target frequency domain position/target frequency is associated with the first electronic tag, or the target frequency domain position/target frequency is determined according to the identifier of the first electronic tag. In this way, the first electronic tag sends the first signal at a target frequency domain position/target frequency every time the second signal(s) is received according to the first period.

[**0149]** In some embodiments, the operation that the first electronic tag sends the first signal according to the first period includes: in a case that the first trigger signaling, received by the first electronic tag, includes activation indication information for indicating activation of periodically sending the first signal, the first electronic tag sends the first signal according to the first period.

[**0150]** Alternatively, in a case that the first trigger signaling, received by the first electronic tag, includes activation indication information for indicating activation of periodically sending the first signal, the first electronic tag sends the first signal once every first period.

[**0151]** Alternatively, the first trigger signaling in any one embodiment may be sent by broadcast, unicast, or multicast.

[**0152]** Alternatively, the first trigger signaling may be sent by the first device or the second device. For example, the first device or the second device may broadcast or unicast or multicast the first trigger signalling.

[**0153]** Alternatively, the first trigger signaling may not be used for power supply, or the first trigger signaling may be used for power supply. Alternatively, the first trigger signaling may not be included in the power supply signal, or the first trigger signaling may be included in the power supply signal.

[**0154]** Alternatively, in a case that the first trigger signaling, received by any one electronic tag, includes activation indication information for indicating activation of periodically sending the first signal, the any one electronic tag sends the first signal according to the first period. Alternatively, in a case that the first trigger signaling including activation indication information for indicating activation of periodically sending the first signal is received by any one electronic tag, the any one electronic tag may immediately send the first first signal, or the any one electronic tag may send the first first signal after the time interval of third duration starting from a beginning time of receiving the first trigger signaling, or the any one electronic tag may start to send the first first signal at a preset time. Alternatively, the third duration and/or the preset time may be preconfigured by any one electronic tag, or may be configured by the first device, the second device, or the positioning control device to the any one electronic tag, or may be agreed by a protocol.

[**0155]** In some embodiments, the method further includes: in a case that the first trigger signaling, received by the first electronic tag, includes deactivation indication information for indicating deactivation of sending the first signal, the first electronic tag stops sending the first signal.

[**0156]** In some embodiments, the method further includes: in a case that the number of times of sending the first signal by the first electronic tag is greater than or equal to the first number of times of sending, the first electronic tag stops sending the first signal.

[**0157]** Alternatively, in a case that the first trigger signaling, received by any one electronic tag, includes deactivation indication information for indicating deactivation of sending the first signal, the any one electronic tag stops sending the first signal.

[**0158]** Alternatively, in a case that the number of times of sending the first signal by any one electronic tag is greater than or equal to the first number of times of sending, the any one electronic tag stops sending the first signal.

[**0159]** Alternatively, the first number of times of sending may be preconfigured by any electronic tag, or may be configured by the first device, the second device, or the positioning control device to the any one electronic tag, or may be agreed by a protocol. For example, the first number of times of sending may be included in the first trigger signaling, and the first trigger signaling further includes activation indication information for indicating activation of periodically sending the first signal.

[**0160]** In some embodiments, the first trigger signaling includes or indicates at least one of: one sequence or a group of sequences, a control signaling packet, an identifier of the first electronic tag, a group identifier corresponding to the first electronic tag, a temporary identifier of the first electronic tag, a EPC of the first electronic tag, the first period, the first number of times of sending the first signal, activation indication information or deactivation indication information, sending power information of the first signal, or sending frequency information of the first signal.

[**0161]** Alternatively, the first trigger signaling sent to any one electronic tag includes or indicates at least one of: one sequence or a group of sequences, a control signaling packet, an identifier of any one electronic tag, a group identifier corresponding to any one electronic tag, a temporary identifier of any one electronic tag, a EPC of any one electronic tag, the first period, the first number of times of sending the first signal, activation indication information or deactivation indication information, sending power information of the first signal, or sending frequency information of the first signal.

[**0162]** Alternatively, one sequence or a group of sequences, and/or, the control signaling packet, may be used to indicate periodically sending the first signal.

[**0163]** Alternatively, the sending frequency information of the first signal may include a frequency domain position or a frequency for sending the first signal.

[**0164]** Alternatively, the identifier of any one electronic tag is used to instruct the any one electronic tag to send the first signal. An electronic tag other than the any one electronic tag does not need to send the first signal even if the first trigger signaling is received. Alternatively, the group identifier is used to instruct the electronic tag within the group to send the first signal. The electronic tag outside the group does not need to send the first signal even if the first trigger signaling is received.

[**0165]** In some embodiments, the operation that the first electronic tag sends the first signal according to the first period includes: in a case that the second signal(s) is received by the first electronic tag, and/or the second signal(s) is received by the first electronic tag through the first frequency, and/or an energy/a power for receiving the second signal(s) by the first electronic tag is greater than or equal to the first threshold, the first electronic tag sends the first signal according to the first period. In other embodiments, in a case that the second signal(s) is not received by the first electronic tag through the first frequency, and/or the energy/power for receiving the second signal(s) by the first electronic tag is less than the first threshold, the terminal device does not send the first signal, or does not send the first signal once, or sends the first signal once.

[**0166]** In some embodiments, the operation that the first electronic tag sends the first signal according to the first period includes the following operation.

[**0167]** In a case that the first positioning request signal is received by the first electronic tag, and/or, the first positioning request signal is received by the first electronic tag through the second frequency, or in a case that an energy/a power for receiving the first positioning request signal by the first electronic tag is greater than or equal to the second threshold, the first electronic tag sends the first signal according to the first period. In other embodiments, in a case that the first positioning request signal is not received by the first electronic tag through the second frequency, and/or, the energy/power for receiving the first positioning request signal by the first electronic tag is less than the second threshold, the terminal device does not send the first signal, or does not send the first signal once, or sends the first signal once.

[**0168]** In some embodiments, the operation that the first electronic tag sends the first signal according to the first period includes: in a case that the first indication information or the second indication information is received by the first electronic tag, the first electronic tag sends the first signal according to the first period. The first indication information is used to instruct the second device to perform feedback, and the second indication information is used to instruct a device that receives the second indication information to perform feedback.

[**0169]** Alternatively, the second signal(s) may be power supply signal(s). Alternatively, the first positioning request signal may be a non-power supply signal or a power supply signal.

[**0170]** Alternatively, at least one of the first frequency, the second frequency, the first threshold, or the second threshold may be preconfigured by the first electronic tag, or may be configured by the first device, the second device, or the positioning control device to any one electronic tag, or may be agreed by a protocol.

[**0171]** In some embodiments, the operation that the first electronic tag sends first signal includes: in a case that the second trigger signaling is received by the first electronic tag, the first electronic tag sends the first signal. The second trigger signaling is used to instruct to send the first signal.

[**0172]** Alternatively, the second trigger signaling may be sent by the first device or the second device.

[**0173]** Alternatively, the second trigger signaling in any one embodiment may be sent by broadcast, unicast, or multicast.

[**0174]** Alternatively, the second trigger signaling is used to instruct to send the first signal once.

[**0175]** Alternatively, the operation that the first electronic tag sends the first signal includes: in a case that the second trigger signaling is received by the first electronic tag, the first electronic tag sends the first signal once.

[**0176]** Alternatively, the second trigger signaling may include at least one of: a time domain resource and/or a frequency domain resource for sending the first signal by the first electronic tag, so that the first electronic tag sends the first signal once according to the time domain resource and/or the frequency domain resource. Alternatively, the time domain resource and/or the frequency domain resource for sending the first signal by the first electronic tag may be preconfigured by the first electronic tag, or may be agreed by a protocol.

[**0177]** Alternatively, the solution in the present embodiment may be combined with a solution of periodically sending the first signal. For example, the first device or the second device requires a long period to acquire the first signal sent by the first electronic tag once, and if it is necessary to quickly acquire the first signal between the two periods, the first device or the second device may send the second trigger signaling to quickly receive the first signal sent by the first electronic tag.

[**0178]** In some embodiments, the first signal includes or carries position information of the first electronic tag and/or an identifier of the first electronic tag. Alternatively, the device that receives the first signal may determine position information of the first electronic tag in the first signal. Alternatively, the device that receives the first signal may determine the position information of the first electronic tag according to the identifier of the first electronic tag in the first signal.

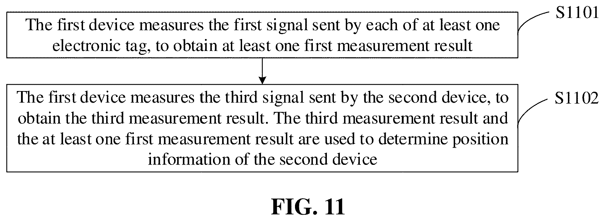

[**0179]** FIG. 11 is a schematic flowchart of another communication method according to an embodiment of the present disclosure. As illustrated in FIG. 11, the method is applied to a first device, and the method includes the following operations.

[**0180]** In operation S1101, the first device measures the first signal sent by each of at least one electronic tag, to obtain at least one first measurement result.

[**0181]** In operation S1102, the first device measures the third signal sent by the second device, to obtain the third measurement result. The third measurement result and the at least one first measurement result are used to determine position information of the second device.

[**0182]** Alternatively, the at least one first measurement result may correspond to the at least one electronic tag one-to-one.

[**0183]** Alternatively, the first device may determine the position information of the second device according to the at least one first measurement result. Alternatively, the first device may send at least one first measurement result to the positioning control device, so that the positioning control device determines position information of the second device according to the at least one first measurement result. Alternatively, the first device and/or the second device may receive the position information of the second device sent by the positioning control device.

[**0184]** Alternatively, the first device may further measure the third signal sent by the second device to obtain the third measurement result. The third measurement result and the at least one first measurement result are used to determine position information of the second device.

[**0185]** Alternatively, the first device may determine the position information of the second device according to the third measurement result and the at least one first measurement result. Alternatively, the first device may send the third measurement result and the at least one first measurement result to the positioning control device, so that the positioning control device determines the position information of the second device according to the third measurement result and the at least one first measurement result.

[**0186]** Alternatively, the first device may receive the first signal sent by each electronic tag and measure each received first signal. Alternatively, the first device may receive the first signal on the third time domain resource and/or the third frequency domain resource.

[**0187]** Alternatively, any one measurement result (including the first measurement result or the second measurement result described below) may include result(s) corresponding to one or more measurement parameters/measurement variables.

[**0188]** In some embodiments, the operation that the first device measures the first signal sent by each of the at least one electronic tag includes: the first device measures the first signal sent by each electronic tag according to the first period.

[**0189]** Alternatively, the first device measures the first signal sent by each electronic tag every first period, and obtains the at least one first measurement result every one or more first periods.

[**0190]** Alternatively, the first device measures the first signal sent by each electronic tag every first period, and obtains at least one measurement result every first period. Alternatively, at least one measurement result obtained every first period may be determined as at least one first measurement result obtained every first period. Alternatively, at least one measurement result obtained in the last first period every multiple first periods may be determined as at least one first measurement result obtained every multiple first periods. Alternatively, one of a maximum value, a minimum value, an average value, a median value, a mode value, or the like of respective measurement results obtained every multiple first periods may be determined as at least one first measurement result obtained every first period. Alternatively, smooth filtering may be performed on respective measurement results obtained every multiple first periods, and at least one first measurement result obtained in each of the multiple first periods may be determined according to the smooth filtering result.

[**0191]** Alternatively, the first device will continuously obtain the latest first signal and the latest at least one first measurement result, so that the first device can determine the position information of the second device according to the third measurement result and the latest at least one first measurement result.

[**0192]** In some embodiments, the method further includes: the first device sends the second signal(s) according to the second period. The second period is less than or equal to the first period.

[**0193]** Alternatively, the first device may send the second signal(s) every second period. The second period is less than or equal to the first period.

[**0194]** Alternatively, the number of signals included in the second signals sent by the first device for different times may be the same or different. Alternatively, multiple signals among the second signals each time sent by the first device may be periodic or aperiodic.

[**0195]** Alternatively, the first device may send the second signal(s) on the fourth time domain resource and/or the fourth frequency domain resource. Alternatively, the fourth frequency domain resource may be the same as the second frequency domain resource.

[**0196]** In some embodiments, the second signal(s) include the third signal and/or the fourth signal.

[**0197]** The third signal is used for at least one of: identifying the first electronic tag, waking up the first electronic tag, powering the first electronic tag.

[**0198]** The fourth signal is used for the first electronic tag to send the first signal.

[**0199]** Alternatively, the first device may send, every second period, the second signal(s) within the second duration of each second period.

[**0200]** Alternatively, the third signal may be partial signal(s) of the second signal(s) firstly received by the first electronic tag, and the fourth signal may be signal(s), other than the partial signal(s), in the second signal(s).

[**0201]** Within the second duration, partial signal(s) of the second signal(s) firstly received by the first electronic tag is used for at least one of the following: identifying the first electronic tag, waking up the first electronic tag, or powering the first electronic tag. Signal(s), other than the partial signal(s), in the second signal(s) are used for the first electronic tag to send the first signal.

[**0202]** Alternatively, the second duration corresponding to sending the second signal(s) may be preconfigured by the first device, or may be configured to the first device by any device other than the first device, or may be agreed in a protocol.

[**0203]** In some embodiments, the second period is equal to the first period.

[**0204]** The operation that the first device measures the first signal sent by each electronic tag according to the first period includes: in a case that every time the second signal(s) is sent, the first device measures, according to the first period, the first signal sent by each electronic tag.

[**0205]** Alternatively, in a case that the first device sends the second signal(s) once every second period, the first device measures the first signal sent by each electronic tag every time, and obtains the at least one first measurement result every one or more first periods.

[**0206]** Alternatively, after the first device sends the second signal(s) once in the second period (also referred to as the first period), the first device may receive the first signal sent by each electronic tag, then measure the first signal to obtain the at least one first measurement result every one or more first periods.

[**0207]** In some embodiments, in a case that the second signal(s) are received each time by each of at least two electronic tags, for different electronic tags of the at least two electronic tags, time intervals starting from a beginning time or an end time of receiving the second signal(s) every time to a time for sending the first signal every time are different. Each time interval is associated with each electronic tag, or the time interval is determined according to an identifier of each electronic tag.

[**0208]** For example, at least two electronic tags include the first electronic tag and the second electronic tag. For the first electronic tag, an interval time starting from a beginning time or an end time of receiving the second signal(s) every time to a time for sending the first signal is the first target duration. For the second electronic tag, an interval time starting from a beginning time or an end time of receiving the second signal(s) every time to a time for sending the first signal is the second target duration. The first target duration is different from the second target duration. Alternatively, the beginning time of receiving the second signal(s) may refer to the time when the second signal(s) is firstly received in one first period. Alternatively, the end time of receiving the second signal(s) may refer to the time when the second signal(s) is received latest in one first period.

[**0209]** Alternatively, the time interval (corresponding to the first duration described above) corresponding to each electronic tag is associated with each electronic tag, or may be determined according to the identifier of each electronic tag.

[**0210]** In some embodiments, the operation that that the first device measures the first signal sent by each electronic tag according to the first period includes: in a case that the first trigger signaling, sent by the first device, includes activation indication information for indicating activation of periodically sending the first signal, the first device measures the first signal sent by each electronic tag according to the first period.

[**0211]** In some embodiments, the method further includes: in a case that the first trigger signaling, sent by the first device, includes deactivation indication information for indicating deactivation of sending the first signal, the first device stops receiving the first signal sent by each electronic tag, or the first device stops measuring the first signal.

[**0212]** In some embodiments, the method further includes: in a case that the number of times of receiving the first signal sent by each electronic tag by the first device is greater than or equal to the first number of times of sending, the first device stops receiving the first signal sent by each electronic tag, or the first device stops measuring the first signal.

[**0213]** Alternatively, the first number of times of sending may be preconfigured by the first device, or may be configured to the first device by any device other than the first device, or may be agreed in a protocol.

[**0214]** In some embodiments, the first trigger signaling includes or indicates at least one of: one sequence or a group of sequences, a control signaling packet, an identifier of the first electronic tag, a group identifier corresponding to the first electronic tag, a temporary identifier of the first electronic tag, a EPC of the first electronic tag, the first period, a first number of times of sending the first signal, activation indication information or deactivation indication information, sending power information of the first signal, or sending frequency information of the first signal.

[**0215]** In some embodiments, the operation that the first device measures the first signal sent by each electronic tag according to the first period includes: in a case that the first device sends second signal(s) or the first device sends the second signal(s) through the first frequency, the first device measures the first signal sent by each electronic tag according to the first period.

[**0216]** Alternatively, the operation that the first device measures the first signal sent by each electronic tag according to the first period includes: in a case that the energy/power for sending the second signal(s) by the first device is greater than or equal to the third threshold, the first device measures the first signal sent by each electronic tag according to the first period. Alternatively, the third threshold is greater than the first threshold.

[**0217]** In other embodiments, in a case that the first device does not send the second signal(s) through the first frequency, and/or, the energy/power for sending the second signal(s) by the first device is less than the third threshold, the first device does not receive the first signal, or the first device does not receive the first signal once, or receives the first signal once.

[**0218]** In some embodiments, the operation that the first device measures the first signal sent by each electronic tag according to the first period includes: in a case that the first device sends the first positioning request signal or the first device sends the first positioning request signal through the second frequency, the first device measures the first signal sent by each electronic tag according to the first period.

[**0219]** Alternatively, the operation that the first device measures the first signal transmitted by each electronic tag according to the first period includes: in a case that the energy/power for sending the first positioning request signal by the first device is greater than or equal to the fourth threshold, the first device measures the first signal sent by each electronic tag according to the first period. Alternatively, the fourth threshold is greater than the second threshold.

[**0220]** In some other embodiments, in a case that the first device does not send the first positioning request signal through the second frequency, and/or, the energy/power for sending the first positioning request signal by the first device is less than the fourth threshold, the first device does not receive the first signal, or the first device does not receive the first signal once, or receives the first signal once.

[**0221]** In some embodiments, the operation that the first device measures the first signal sent by each electronic tag according to the first period includes: in a case that the first device sends the first indication information or second indication information, the first device measures the first signal sent by each electronic tag according to the first period. The first indication information is used to instruct the second device to perform feedback, and the second indication information is used to instruct a device that receives the second indication information to perform feedback.

[**0222]** In some embodiments, the operation that the first device measures the first signal sent by each of the at least one electronic tag to obtain at least one first measurement result includes: in a case that the first device sends the second trigger signaling, the first device measures the first signal sent by each electronic tag to obtain the at least one first measurement result.

[**0223]** The second trigger signaling is used to instruct to send the first signal.

[**0224]** In this way, the first device sends the second trigger signaling, so that each electronic tag can feed back the first signal once, thus the first device can quickly obtain at least one first measurement result.

[**0225]** In some embodiments, the first signal includes or carries position information of the first electronic tag and/or an identifier of the first electronic tag.

[**0226]** In some embodiments, the method further includes: the first device determines, from the at least one first measurement result, one or more target measurement results with a smallest difference from the third measurement; and the first device determines the position information of the second device according to the position information of at least one electronic tag corresponding to the one or more target measurement results.

[**0227]** Alternatively, the number corresponding to the one or more target measurement results may be preconfigured by the first device, or may be configured to the first device by any device other than the first device, or may be agreed by a protocol.

[**0228]** Exemplarily, the first device may determine the position information, of the electronic tag, corresponding to the target measurement result with the smallest difference from the third measurement result as the position information of the second device. Exemplarily, the first device may average or weighted average position information of electronic tags corresponding to multiple target measurement results to determine the position information of the second device.

[**0229]** Alternatively, the operation that the first device determines position information of the second device according to position information of the at least one electronic tag corresponding to the one or more target measurement results includes: the first device determines position information of the second device according to position information of the at least one electronic tag corresponding to the one or more target measurement results and at least one difference between the one or more target measurement results and the third measurement result. Alternatively, the first device determines at least one weight according to at least one difference, and determines the position information of the second device according to the at least one weight by adopting a weighted average method.

[**0230]** Exemplarily, the multiple target measurement results are 1 and 3, respectively, and the third measurement result is 2. It is indicated that the second device is located at an intermediate position of the electronic tags corresponding to the multiple target measurement results. The position information of the at least one electronic tag corresponding to the one or more target measurement results is (x1, y1), (x2, y2), respectively, then the position information of the second device is ((x1+x2)/2, (y1+y2)/2). In another example, the multiple target measurement results are 1 and 5, respectively, and the third measurement result is 2. It is indicated that the second device is close to the electronic tag corresponding to the target measurement result of 1. The weight corresponding to the electronic tag corresponding to the target measurement result of 1 is 0.75, the weight corresponding to the electronic tag corresponding to the target measurement result of 5 is 0.25, and the position information of the at least one electronic tag corresponding to the one or more target measurement results is (x1, y1) and (x2, y2), respectively, then the position information of the second device is (0.75 x1+0. 25x2, 0.75 y1+0. 25y2).

[**0231]** In some embodiments, the method further includes the following operations.

[**0232]** The first device sends the at least one first measurement result to a positioning control device.

[**0233]** The first device sends the third measurement result to the positioning control device.

[**0234]** The third measurement result and the at least one first measurement result are used for the positioning control device to determine position information of the second device.

[**0235]** Alternatively, the positioning control device may determine, from the at least one first measurement result, one or more target measurement results with a smallest difference from the third measurement result. The positioning control device determines the position information of the second device according to the position information of the at least one electronic tag corresponding to the one or more target measurement results.

[**0236]** Alternatively, the manner for determining the position information of the second device by the positioning control device may be similar to the manner for determining the position information of the second device by the first device, which will not be described repeatedly herein.

[**0237]** In some embodiments, the method further includes the following operations.

[**0238]** The first device receives the second positioning request signal sent by the second device.

[**0239]** The first device receives the third indication information sent by each of at least one third device. The third indication information indicates that the second positioning request signal is received by the third device.

[**0240]** The first device determines the at least one electronic tag in the first region according to the position information of the first device and the position information of the at least one third device.

[**0241]** Alternatively, the second device may broadcast or unicast or multicast the second positioning request signal. Alternatively, the second positioning request signal may carry at least one of: an identifier of the second device, an identifier for requesting obtaining a positioning.

[**0242]** Alternatively, the third device may be of the same device type as the first device. For example, both the first device and the third device are network devices, or both the first device and the third device are base stations, or both the first device and the third device are terminal devices, or the like. Alternatively, the first device and/or any third device may be a device with a fixed position, or may be a device with a variable position. Alternatively, the third device and the first device may be of different types. Exemplarily, among the first device and the at least one third device, a part of the devices is terminal device(s), and the other part of the device is network device(s).

[**0243]** Alternatively, in a case that the second positioning request signal sent by the second device is received by the first device, the first device starts to monitor the third indication information, and in a case that the third indication information is received, the first device determines the at least one electronic tag in the first region according to the position information of the first device and the position information of the at least one third device. Alternatively, the first device may determine an intersection of the coverage range of the first device and the coverage range of the at least one third device as the first region. Alternatively, the first device may determine a region surrounded by the first device and the at least one third device as the first region.

[**0244]** Alternatively, each third indication information may include indication information for indicating a coverage range of each third device. For example, each third indication information may include position information of each third device and/or coverage radius information of each third device.

[**0245]** In some embodiments, the method further includes the following operations.

[**0246]** The first device measures the second positioning request signal to obtain the fourth measurement result.

[**0247]** The first device receives the fifth measurement result sent by each third device. The fifth measurement result is obtained by measuring the second positioning request signal by each third device.

[**0248]** The operation that the first device determines the at least one electronic tag in the first region according to the position information of the first device and the position information of the at least one third device includes: the first device determines the at least one electronic tag in the first region according to the position information of the first device, the position information of the at least one third device, the fourth measurement result, and the at least one fifth measurement result.

[**0249]** Alternatively, the fifth measurement result and the third indication information may be carried in the same signaling, or may be carried in different signaling. Alternatively, the third indication information may include the fifth measurement result, or the third indication information may not include the fifth measurement result.

[**0250]** Alternatively, among the fourth measurement result and the at least one fifth measurement result, if one measurement result is better than other measurement results, and the differences between the measurement result and other measurement results are all greater than a preset threshold value, it is indicated that the second device is closer to the device corresponding to the one measurement result, and the coverage range corresponding to the device may be determined as the first region. Alternatively, among the fourth measurement result and the at least one fifth measurement result, if at least two measurement results are better than other measurement results, and the differences between the two measurement results and other measurement results are all greater than a preset threshold value, it is indicated that the second device is closer to the devices corresponding to the at least two measurement results, and the intersection of the coverage ranges corresponding to the at least two measurement results may be determined as the first region. Alternatively, the first device may obtain one or more greatest measurement results among the fourth measurement result and the at least one fifth measurement result, and determine an intersection of coverage range(s) corresponding to the device(s) corresponding to the one or more greatest measurement results as the first region.

[**0251]** In some embodiments, the method further includes the following operations.

[**0252]** The first device broadcasts the first indication information or the second indication information. The first indication information is used to instruct the second device to perform feedback, and the second indication information is used to instruct a device that receives the second indication information to perform feedback.

[**0253]** In a case that feedback information sent by the second device is received by the first device, the first device determines that the second device is included in a coverage range of the first device, and/or, determines the at least one electronic tag within a coverage range of the first device.

[**0254]** Alternatively, the first indication information may include an identifier of the second device. Alternatively, the positioning control device may send an identifier of the second device to one or more network devices, and the one or more network devices include the first device.

[**0255]** Alternatively, each network device may broadcast the first indication information, and in a case that the feedback information is received by the first device, the first device determines that the second device is included in a coverage range of the first device.

[**0256]** Alternatively, in a case that the first device broadcasts the first indication information, the feedback information may be an Acknowledgment (ACK) character.

[**0257]** Alternatively, in order for the first device to determine which devices are included in its coverage range, the first device may broadcast the second indication information, so that devices (including the second device) within the coverage range of the first device send feedback information to the first device.

[**0258]** Alternatively, in a case that the first device broadcasts the second indication information, the feedback information may include an identifier of the second device.

[**0259]** In some embodiments, the method further includes: the first device determines the at least one electronic tag within the first region responsive to an input first region.

[**0260]** In some embodiments, the first device receives the first region sent by the fourth device, and determines the at least one electronic tag within the first region.

[**0261]** Alternatively, the fourth device may be any device other than the first device.

[**0262]** In some embodiments, the method further includes: the first device determines position information of the second device according to the third measurement result and the at least one first measurement result.

[**0263]** In some embodiments, the method further includes: the first device determines position information of the second device according to the third measurement result and the at least one first measurement result, and sends the position information of the second device to the second device or a positioning control device.

[**0264]** Alternatively, every time the position information of the second device is obtained by the first device, the first device may send the position information of the second device to the second device or the positioning control device, so that the second device or the positioning control device stores the latest position information of the second device. Alternatively, every time the position information of the second device is obtained by the first device, the first device may store the latest position information of the second device, and in a case that the position request sent by the second device or the positioning control device is received by the first device, the first device sends the position information of the second device to the second device or the positioning control device.

[**0265]** In some embodiments, the method further includes: the first device sends the third measurement result and the at least one first measurement result to the positioning control device.

[**0266]** Alternatively, in a case that at least one first measurement result is obtained every time, the first device sends the at least one first measurement result obtained every time to the positioning control device.

[**0267]** Alternatively, the first device may send the third measurement result to the positioning control device, so that the positioning control device determines position information of the second device according to the third measurement result and the latest at least one first measurement result.

[**0268]** In some embodiments, the method further includes the following operation. The first device sends the third measurement result and the at least one first measurement result to the positioning control device, and receives the position information of the second device sent by the positioning control device.

[**0269]** Alternatively, the first device may send the third measurement result to the positioning control device, so that the positioning control device determines the position information of the second device according to the third measurement result and the latest at least one first measurement result.

[**0270]** In some embodiments, the method further includes: the first device sends the third measurement result and the at least one first measurement result to the positioning control device, receives the position information of the second device sent by the positioning control device, and sends the position information of the second device to the second device.

[**0271]** Alternatively, in a case that the position information of the second device is obtained or stored by the positioning control device, the positioning control device may send the position information of the second device to the Application Function (AF) device. For example, in a case that the positioning request for the second device sent by the AF device is received by the positioning control device, the positioning control device sends the position information of the second device to the AF device.

[**0272]** Alternatively, the positioning control device may receive a positioning request for the second device sent by the AF device, and send the position information of the second device to the AF device in a case that the position information of the second device is obtained.

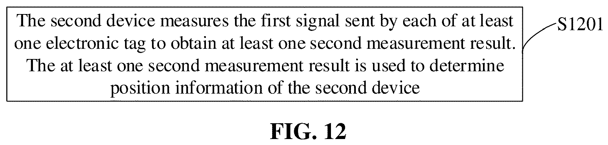

[**0273]** FIG. 12 is a schematic flowchart of yet another communication method according to an embodiment of the present disclosure. As illustrated in FIG. 10, the method is applied to the second device, and the method includes the following operation.

[**0274]** In operation S1201, the second device measures the first signal sent by each of at least one electronic tag to obtain at least one second measurement result. The at least one second measurement result is used to determine position information of the second device.

[**0275]** Alternatively, the at least one second measurement result may correspond to the at least one electronic tag one-to-one.

[**0276]** Alternatively, the second device may determine position information of the second device according to the at least one second measurement result. Alternatively, the second device may send at least one second measurement result to the positioning control device, so that the positioning control device determines position information of the second device according to the at least one second measurement result. Alternatively, the second device may receive the position information of the second device sent by the positioning control device.

[**0277]** Alternatively, the second device may receive the first signal sent by each electronic tag and measure each received first signal. Alternatively, the second device may receive the first signal on the third time domain resource and/or the third frequency domain resource.

[**0278]** Alternatively, the second device may measure the first signal sent by each electronic tag every first period, and obtain the at least one second measurement result every one or more first periods.

[**0279]** Alternatively, the second device measures the first signal sent by each electronic tag every first period, and obtains at least one measurement result every first period. Alternatively, at least one measurement result obtained every first period may be determined as at least one second measurement result obtained every first period. Alternatively, at least one measurement result obtained in the last first period of every multiple first periods may be determined as at least one second measurement result obtained every multiple first periods. Alternatively, one of a maximum value, a minimum value, an average value, a median value, a mode value, or the like of respective measurement results obtained every multiple first periods may be determined as at least one second measurement result obtained every first period. Alternatively, smooth filtering may be performed on respective measurement results obtained every multiple first periods, and at least one first measurement result obtained in each of the multiple first periods may be determined according to the smooth filtering result.

[**0280]** Alternatively, the second device will continuously obtain the latest first signal and the latest at least one second measurement result, so that the first device can determine the position information of the second device according to the latest at least one second measurement result.

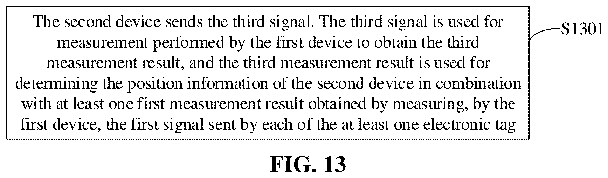

[**0281]** FIG. 13 is a schematic flowchart of still another communication method according to an embodiment of the present disclosure. As illustrated in FIG. 10, the method is applied to the second device, and the method includes the following operation.

[**0282]** In operation S1301, the second device sends the third signal. The third signal is used for measurement performed by the first device to obtain the third measurement result, and the third measurement result is used for determining the position information of the second device in combination with at least one first measurement result obtained by measuring, by the first device, the first signal sent by each of the at least one electronic tag.

[**0283]** Alternatively, the operation that the second device sends the third signal may include: the second device sends the third signal once, or the second device sends the third signal periodically or aperiodically. Alternatively, the second device may send the third signal once every third period. Alternatively, the third period may be equal to the first period, or the third period may be greater or less than the first period. In this way, every time the second device sends the third signal, the first device may obtain the latest position information of the second device every time according to the measurement result of the third signal sent every time and the at least one first measurement result obtained last time. Alternatively, the third period may be preconfigured by the second device, or may be configured by the first device to the second device, or may be agreed by a protocol.

[**0284]** In some embodiments, the method further includes: the second device sends the second positioning request signal. The second positioning request signal is able to be received by the first device and the at least one third device, and the second positioning request signal is used for the first device to determine the at least one electronic tag in the first region according to the position information of the first device and the position information of the at least one third device.

[**0285]** In some embodiments, the method further includes the following operations.

[**0286]** The second device receives the first indication information or the second indication information sent by the first device. The first indication information is used to instruct the second device to perform feedback, and the second indication information is used to instruct a device that receives the second indication information to perform feedback.

[**0287]** The second device sends feedback information to the first device. The feedback information is used for the first device to determine that the second device is comprised in a coverage range of the first device, and/or, to determine the at least one electronic tag within the coverage range of the first device.

[**0288]** In some embodiments, the method further includes: the second device determines the position information of the second device according to the at least one second measurement result.

[**0289]** In some embodiments, the method further includes: the second device determines the position information of the second device according to the at least one second measurement result, and sends the position information of the second device to the first device or a positioning control device.

[**0290]** In some embodiments, the method further includes: the second device sends the at least one second measurement result to the first device or the positioning control device.

[**0291]** Alternatively, in a case that the at least one measurement result is received by the first device or the positioning control device, the first device or the positioning control device selects greatest one or more specific measurement results from the at least one measurement result, and determines the position information of the second device according to the position information of the one or more electronic tags respectively corresponding to the one or more specific measurement results.

[**0292]** Alternatively, the second device not only sends the at least one second measurement result to the first device or the positioning control device, but also sends the identifier and/or position information of at least one electronic tag to the first device or the positioning control device.

[**0293]** In some embodiments, the method further includes the following operation. The second device sends the at least one second measurement result to the first device or the positioning control device, and receives the position information of the second device sent by the first device or the positioning control device.

[**0294]** In some embodiments, the operation that the second device determines the position information of the second device according to the at least one second measurement includes: the second device determines, from the at least one first measurement, greatest one or more specific measurement results. The second device determines the position information of the second device according to the position information, of at least one electronic tag, corresponding to the one or more specific measurement results.

[**0295]** Alternatively, the number corresponding to the one or more specific measurement results may be preconfigured by the second device, or may be configured to the second device by any device other than the first device or the second device, or may be agreed by a protocol.

[**0296]** Alternatively, an embodiment in which the second device determines the position information of the second device according to the position information of the at least one electronic tag corresponding to the one or more specific measurement results may be similar to the embodiment in which the first device determines the position information of the second device according to the position information of the at least one electronic tag corresponding to the one or more target measurement results, which will not be described repeatedly here.

[**0297]** In some embodiments, the first signal includes or carries position information of the first electronic tag and/or an identifier of the first electronic tag.

[**0298]** An embodiment of the present disclosure provides a method for updating a measurement result corresponding to a positioning reference tag. When the measurement result needs to be updated, the reference tag (corresponding to above any one electronic tag, including the first electronic tag) sends a signal (corresponding to the above first signal), and a network device (corresponding to the above first device) or a target device (corresponding to the above second device) performs measurement according to the signal to obtain a measurement result.

[**0299]** Alternatively, the reference tag mainly refers to a zero-power device.

[**0300]** Alternatively, the network device includes at least one of the following: a base station in a cellular network, a smartphone, a gateway, or an AP in a WLAN network.

[**0301]** Alternatively, the measurement variable of the reference tag is not limited in the present disclosure. The measurement variable may include one or more pieces of following information: RSRP, RSSI, SINR, phase, LOS indication, timing, angle, or the like.

[**0302]** Alternatively, the target device may be a zero-power device, a smartphone, a computer, or the like.

[**0303]** Alternatively, the manner for sending the positioning signal (corresponding to the above first signal) by the positioning reference tag (i.e., the reference tag) may include one of the following: periodic sending, semi-static periodic sending, or dynamically triggered single-time sending.

[**0304]** Alternatively, for periodic sending, the reference tag needs to send the positioning signal (at least) every T time (corresponding to the first period described above).

[**0305]** Alternatively, the value of the period parameter T may be preset, predefined by the protocol, or configured by a positioning control device (e.g. LMF).

[**0306]** Alternatively, the signal source also needs to periodically send a power supply signal (corresponding to the above second signal(s)), so that the reference tag backscatters positioning signal (corresponding to the above first signal). Alternatively, the period T' for the signal source is less than or equal to the period T for the reference tag. The embodiments of the present disclosure may be applied to inactive or semi-inactive reference tags, but may also be applied to active reference tags.

[**0307]** Alternatively, for the active reference tag, sufficient power may be harvested firstly by means of environmental power harvesting or the like, and a reference signal may be actively sent periodically. For example, the means of environmental power harvesting may include light energy, wind energy, and the like.

[**0308]** Alternatively, the period parameter T is associated with the capability of the reference tag. For example, a reference tag with higher capability harvesting efficiency may harvest sufficient capability to send signals in a shorter time, so that the period parameter T is less.

[**0309]** Alternatively, the offset parameter dt (corresponding to the first duration in the above embodiment) may be expressed as a relative offset time, that is, the reference tag starts to backscatter the signal (corresponding to the first signal) at the time interval dt starting from the time when the power supply signal sent by the signal source is received.

[**0310]** Alternatively, the value of the offset parameter dt may be associated with the reference tag or determined according to the identifier of the reference tag.

[**0311]** The advantage of the periodic sending is that the signaling overhead is small, but all reference tags need to constantly perform backscattering, which may cause waste of resources and energy.

[**0312]** For semi-static periodic sending, that is, when triggered, the reference signal needs to periodically send the positioning signal.

[**0313]** Alternatively, the reference tag is instructed to send the positioning signal by explicit trigger signaling.

[**0314]** Alternatively, the trigger signaling may be sent by a signal source, a target device to be positioned, a positioning control device, or the like.

[**0315]** Alternatively, the trigger signaling may be one specific sequence/a group of specific sequences (information that needs to be carried, such as the ID of the target reference tag, may be carried by the sequence), or may be a control signaling packet, similar to Downlink Control Information (DCI).

[**0316]** Alternatively, the trigger signaling carries information (such as ID, group ID, temporary ID of network configuration, etc.) of the triggered reference tag, and the information instruct the reference tag to send/backscatter the positioning signal.

[**0317]** Alternatively, the trigger signaling may be sent in a broadcast, multicast, or unicast manner.

[**0318]** Alternatively, the reference tag may be instructed to send the positioning signal through an implicit condition.

[**0319]** For example, the reference tag is instructed to send the positioning signal according to the characteristics of the power supply signal sent by the network device/signal source, such as a specific frequency, sequence, energy, etc., or the reference tag is instructed to send the positioning signal when the positioning request signal sent by the target device satisfies a certain condition, and the condition may be that the power is greater than a threshold.

[**0320]** Alternatively, the implicit condition, such as characteristics of the power supply signal, threshold values, etc., may be preconfigured, predefined by the protocol, or configured by the positioning control device.

[**0321]** Alternatively, under the implicit condition, the parameters of the positioning signal sent by the reference tag, such as the period T, the number N of times, etc., need to be preset or preconfigured in advance.

[**0322]** Alternatively, the value of the period parameter T may be preset, predefined by the protocol, or configured by the positioning control device, or may also be carried in the above trigger control signaling. The manner is similar to periodic sending.

[**0323]** Alternatively, the value of the period T may be infinite, which indicates a single-time sending.

[**0324]** Alternatively, the semi-static periodic sending may further include the number N of times of sending, which is used for controlling the number of times of sending the positioning signal after triggering. The numerical value of N is determined in a manner similar to T, which may be preset or configured.

[**0325]** Alternatively, the trigger signaling may carry an activation signaling or a deactivation signaling, and the reference tag activates sending/backscattering of the positioning signal after receiving the activation signaling, and stops after receiving the deactivation signaling.

[**0326]** The advantage of the semi-static periodic sending is that the signal is triggered on demand, which reduces the overhead of resources and power, but the signaling design is complex and the overhead of signaling is great.

[**0327]** For the dynamically triggered single-time sending, the reference tag sends the positioning signal once when triggered.

[**0328]** When the network side needs to quickly acquire the measurement result for a certain reference tag, the dynamically triggered single-time sending may be used in combination with the manner of periodic sending, for example, because the period T for the periodic sending is too long, but the network device or the target device needs to quickly acquire the measurement result, one or more second trigger signals may be dynamically triggered between the two periodic signals, so that the reference tag sends at least one positioning signal once according to each second trigger signal in response to each received second trigger signal.

[**0329]** The embodiments of the present disclosure further provide a method and a flow for triggering a positioning reference signal by a network device.

[**0330]** Alternatively, the network device may include at least: a base station in a cellular network, a smartphone, a gateway, or an AP in a WLAN network.

[**0331]** Alternatively, the network device may send a power supply signal (corresponding to the second signal(s) described above) for backscattering or power harvesting of the zero-power device.

[**0332]** Alternatively, when the reference tag needs to periodically send the positioning signal, the network device also needs to periodically send the power supply signal.

[**0333]** Alternatively, the network device may receive/measure a positioning signal sent by a zero-power tag (which may be a reference tag or a target device), update the measurement result, and report the measurement result to a positioning node (corresponding to the above positioning control device) such as an LMF.

[**0334]** Alternatively, the network device may further send a trigger signaling/control signaling (which includes the above first trigger signaling or the second trigger signaling), which is used for instructing the reference tag (actively/passively) to send the positioning signal.

[**0335]** Alternatively, the network device may preliminarily determine initial region (which corresponds to the above first region or the coverage range of the first device), and then trigger the reference tag in the initial region to send a positioning signal, update the measurement result and use it to calculate the accurate position of the target device.

[**0336]** Alternatively, the network device may determine the initial region of the position of the target device according to the signal sent by the target device (corresponding to the above third signal, such as the position of the network device receiving the signal, the intensity of signal reception, etc.).

[**0337]** Alternatively, the signal sent by the target device may be positioning request information sent by the target device.

[**0338]** Alternatively, the signal sent by the target device may be feedback information of the target device, and the feedback information is used to respond to the object search of the network device (corresponding to the above first indication information or the above second indication information).

[**0339]** Alternatively, the network device may further determine an initial region according to the search requirement, and search for a suitable target device within the initial region.

[**0340]** An embodiment of the present disclosure will be described below.

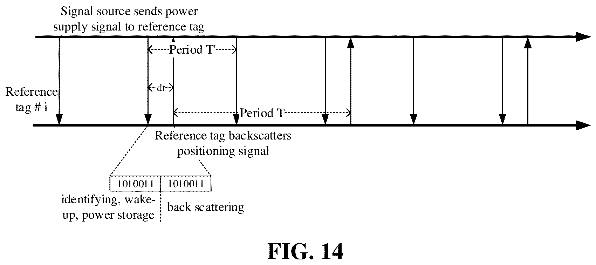

[**0341]** FIG. 14 is a schematic diagram of periodically updating the positioning measurement result according to an embodiment of the present disclosure. As illustrated in FIG. 14, the sending period of a positioning reference signal of a reference tag # i (i is an integer greater than or equal to 1) is T. The periodic back scattering signal may be used as the positioning signal, and the corresponding signal source also needs to periodically send the power supply signal. The period T' for sending the power supply signal by the signal source cannot be greater than the period T of the positioning signal, for example, as illustrated in FIG. 14, 2T' = T. Alternatively, this manner for sending the power supply signal may be applied to an inactive or semi-inactive zero-power device, or may be applied to an active zero-power device. In the embodiment corresponding to FIG. 14, the signal source sends a power supply signal to the reference tag every period T', and the reference tag backscatters the positioning signal every period T.

[**0342]** Alternatively, the zero-power device and the signal source need to negotiate the periods T and T'.

[**0343]** Alternatively, the signal source usually sends the power supply signal for a period of time, such as dt in FIG. 14, so that the reference tag stores a certain amount of power. One possible implementation is that the signal source repeatedly sends a certain sequence/signal (for example, m sequence is sent repeatedly X times) during the time of dt, the sequences in the first X1 times are used for identifying, wake-up, power storage of the reference tag, and then the sequences in the next X2 times may be backscattered. Exemplarily, in FIG. 14, the sequence in one time may be 1010011.

[**0344]** In other embodiments, the reference tag may actively send a positioning signal periodically. The zero-power device may acquire and store some power through environmental power harvesting and other manners, and send the positioning signal according to a certain period.

[**0345]** Another embodiment of the present disclosure is described below.

[**0346]** The main difference between semi-static periodic sending and dynamic sending lies in the design of trigger events. This embodiment will provide the following possible trigger events: explicit trigger or implicit trigger.

[**0347]** The explicit trigger may be implemented through trigger signaling (corresponding to the above first trigger signaling). The signaling may be similar to control signaling DCI/Uplink Control Information (UCI) in a cellular system. The signaling may include at least one of: ID information of the target reference tag, sending period of the positioning signal, activation signaling of the positioning signal, deactivation signaling of the positioning signal, the number of times of sending the positioning signal, power control information of sending or back scattering of the positioning signal, or frequency control information of the positioning signal.

[**0348]** The number of times of sending and the deactivation signaling may be regarded as two different manners.

[**0349]** Alternatively, the number N of times of sending may be indicated by control signaling (such as carrying the activation signaling), and the sending may be automatically stopped after the N times of sending. Alternatively, the positioning reference signal may be activated through the activation signaling and then the sending of the positioning reference signal may be stopped through the deactivation signaling.

[**0350]** The explicit trigger may be implemented through a trigger signal. The trigger signal may have specific information as follows: a specific sequence. For example, a specific sequence is used as the trigger signal. If a small amount of information needs to be carried, it may also be represented through different sequences. For example, two sequences are used to represent activation and deactivation respectively, or N sequences are used to represent N different sets of target reference tags.

[**0351]** The implicit trigger may not be implemented through a dedicated positioning trigger signal, but may be judged by detecting other signals.

[**0352]** Alternatively, the implicit trigger may be implemented through features of the power supply signal sent by the network device/signal source, such as at least one of the following: specific positioning frequency, specific sequence, or power of a signal.

[**0353]** Specific positioning frequency: for example, it is agreed to reserve a certain frequency for positioning, and as long as the reference tag detects a signal at this frequency, it is considered that the positioning is triggered.

[**0354]** Specific sequence: for example, when a network device/signal source looks for the target device around it, it will send a signal similar to paging or discovery to find the target device. The reference tag may also use this signal to trigger its own sending of positioning signal in order to subsequently determine the precise position of the target device.

[**0355]** Power of signal: the reference tag will detect the power of the signal sent by the network device/signal source, and the sending of the positioning signal will be automatically triggered if a certain condition is met (such as the power value is greater than-10dBm), otherwise, the sending of the positioning signal will not be triggered.

[**0356]** The features are used to instruct the reference tag to send a positioning signal.

[**0357]** Alternatively, the implicit trigger may be implemented by the reference tag according to the positioning request signal, sent by the target device, meeting a certain condition.

[**0358]** Alternatively, the above condition may be that the power is greater than the threshold.

[**0359]** Alternatively, the implicit condition, such as features of the power supply signal, or the threshold, etc. may be preconfigured, predefined by a protocol, or configured by the positioning control device, etc.

[**0360]** Still another embodiment of the present disclosure will be described below.

[**0361]** From the perspective of the network device, how the network device determines the initial region is mainly described.

[**0362]** Generally speaking, there are the following several positioning scenarios.

[**0363]** Scenario 1: "Where am I", which is initiated by the target device to obtain position information of the target device itself. In this case, the target device will carry the positioning request information in the back scattering signal, so that the network device can coordinate the positioning nodes around it to send and measure relevant signals.

[**0364]** Alternatively, when the target device initiates positioning, the network device may determine the approximate range of the target device (for example, according to the position of the signal source, the signal strength, etc., corresponding to the reflection signal for the target device), and trigger the network nodes around the network device to update the needed positioning measurement information.

[**0365]** Alternatively, four base stations around the target device receive signals from the target device, and it is can be judged that the target device should be in the initial region that is in the middle of the four base stations.

[**0366]** Alternatively, the strengths of signals received by the four base stations around the target device are different, and the strengths of signals measured by the two base stations on the left are far greater than the strengths of signals measured by the two base stations on the right. In this case, the network may further narrow the position of the target device to a region close to the left, and only need to trigger the reference tag in this initial region.

[**0367]** Scenario 2: "Where is A", which is initiated by the network to find and determine the position information of the target device A. In this case, it may be necessary to conduct a large-scale search first, and all network devices or signal sources will initiate a message looking for the device A. Some network devices/signal sources may receive feedback information from the device A, thereby preliminarily determining that the position of device A is within the coverage region of these network devices/signal sources. This region may be regarded as the initial region.

[**0368]** Scenario 3: "Who is here", which is initiated by the network device to determine which target device is near a certain position. Only reference tags within the coverage range of the network devices/signal sources near this position need to be triggered.

[**0369]** The present disclosure provides a process of triggering the reference tag to send a positioning signal and updating a measurement result of the reference tag in a scenario in which positioning is performed based on a zero-power reference tag, thereby ensuring the timeliness of the measurement result and having a significant effect on improving positioning accuracy.

[**0370]** The technical solution of the present disclosure provides a method and a process for updating a measurement result, which are mainly applicable to timely update the measurement result of a reference tag in a positioning system based on reference tag.

[**0371]** The method for sending (including actively sending and back scattering sending) the positioning signal by the zero-power reference tag may include at least one of the following: periodic sending, semi-static periodic sending, or dynamic single-time sending.

[**0372]** For the periodic sending, it is necessary to specify the period, offset, etc. of periodic sending. For reference tags that can only perform back scattering, the network device need to configure the reference tag to perform power harvesting and signal transmission.

[**0373]** For the semi-static periodic sending, the reference tag will periodically sends the positioning signal after receiving the trigger signaling/signal.

[**0374]** For the dynamic single-time sending, the reference tag will send the positioning signal once after receiving the trigger signaling/signal.

[**0375]** Correspondingly, the network device may provide a power supply signal, so that the reference tag performs power harvesting and/or back scattering on the positioning signal. Additionally, the network device may determine an approximate initial region of the target device, trigger reference tags within the initial region to send a positioning signal, and measure and update result.

[**0376]** The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions shall also fall within the scope of protection of the present disclosure.

[**0377]** It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to UE of a cell, "uplink" is used to indicate that the signal or data is transmitted in a second direction from UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

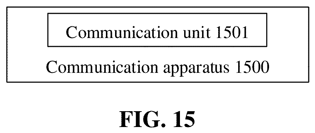

[**0378]** FIG. 15 is a schematic diagram of the structure and composition of the communication apparatus according to an embodiment of the present disclosure. The apparatus is applied to the first electronic tag. As illustrated in FIG. 15, the communication apparatus 1500 includes a communication unit 1501.

[**0379]** The communication unit 1501 is configured to send the first signal. The first signal is used for measurement performed by the first device to obtain the first measurement result or for measurement performed by the second device to obtain the second measurement result, and the first measurement result or the second measurement result is used for determining position information of the second device.

[**0380]** In some embodiments, the communication apparatus 1500 further includes a determination unit. The determination unit is configured to determine the first signal.

[**0381]** In some embodiments, the communication unit 1501 is further configured to send the first signal according to the first period.

[**0382]** In some embodiments, the communication unit 1501 is further configured to receive second signal(s) according to the second period. The second period is less than or equal to the first period.

[**0383]** In some embodiments, the second signal(s) include the third signal and/or the fourth signal.

[**0384]** The third signal is for at least one of: identifying the first electronic tag, waking up the first electronic tag, or powering the first electronic tag.

[**0385]** The fourth signal is used for the first electronic tag to send the first signal.

[**0386]** In some embodiments, the second period is equal to the first period. The communication unit 1501 is further configured to send, according to the first period, the first signal every time the second signal(s) are received.

[**0387]** In some embodiments, the communication unit 1501 is further configured to send, according to the first period, the first signal at a time interval of the first duration starting from a beginning time or an end time of receiving the second signal(s), every time the second signal(s) are received.

[**0388]** The first duration is associated with the first electronic tag, or the first duration is determined according to an identifier of the first electronic tag.

[**0389]** In some embodiments, the communication unit 1501 is further configured to send the first signal according to the first period in a case that the first trigger signaling, received by the first electronic tag, includes activation indication information for indicating activation of periodic sending the first signal.

[**0390]** In some embodiments, the communication unit 1501 is further configured to stop send the first signal in a case that the first trigger signaling, received by the first electronic tag, includes deactivation indication information for indicating deactivation of sending the first signal.

[**0391]** In some embodiments, the communication unit 1501 is further configured to stop send the first signal in a case that the number of times of sending the first signal by the first electronic tag is greater than or equal to the first number of times of sending.

[**0392]** In some embodiments, the first trigger signaling includes or indicates at least one of: one sequence or a group of sequences, a control signaling packet, an identifier of the first electronic tag, a group identifier corresponding to the first electronic tag, a temporary identifier of the first electronic tag, an EPC of the first electronic tag, the first period, the first number of times of sending the first signal, activation indication information or deactivation indication information, sending power information of the first signal, or sending frequency information of the first signal.

[**0393]** In some embodiments, the communication unit 1501 is further configured to send the first signal according to the first period in a case that the second signal(s) are received by the first electronic tag, and/or the second signal(s) are received by the first electronic tag through the first frequency, and/or an energy/power for receiving the second signal(s) by the first electronic tag is greater than or equal to the first threshold.

[**0394]** In some embodiments, the communication unit 1501 is further configured to send the first signal according to the first period in a case that the first positioning request signal is received by the first electronic tag, and/or the first positioning request signal is received by the first electronic tag through the second frequency, or an energy/power for receiving the first positioning request signal by the first electronic tag is greater than or equal to the second threshold.

[**0395]** In some embodiments, the communication unit 1501 is further configured to send the first signal according to the first period in a case that the first indication information or the second indication information is received by the first electronic tag. The first indication information is used to instruct the second device to perform feedback, and the second indication information is used to instruct a device that receives the second indication information to perform feedback.

[**0396]** In some embodiments, the communication unit 1501 is further configured to send the first signal in a case that the second trigger signaling is received by the first electronic tag. The second trigger signaling is used to instruct to send the first signal.

[**0397]** In some embodiments, the first signal includes or carries position information of the first electronic tag and/or an identifier of the first electronic tag.

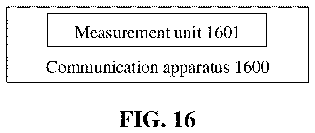

[**0398]** FIG. 16 is a schematic diagram of the structure and composition of another communication apparatus according to an embodiment of the present disclosure. The apparatus is applied to the first device. As illustrated in FIG. 16, the communication apparatus 1600 includes a measurement unit 1601.

[**0399]** The measurement unit 1601 is configured to measure the first signal sent by each of at least one electronic tag, to obtain at least one first measurement result, and measure the third signal sent by the second device, to obtain the third measurement result. The third measurement result and the at least one first measurement result are used to determine position information of the second device.

[**0400]** In some embodiments, the communication device 1600 further includes a communication unit. The communication unit is configured to receive the first signal sent by each electronic tag.

[**0401]** In some embodiments, the measurement unit 1601 is further configured to measure the first signal sent by each electronic tag according to the first period.

[**0402]** In some embodiments, the communication unit is further configured to send the second signal(s) according to the second period. The second period is less than or equal to the first period.

[**0403]** In some embodiments, the second signal(s) comprise the third signal and/or the fourth signal.

[**0404]** The third signal is used for at least one of: identifying the first electronic tag, waking up the first electronic tag, or powering the first electronic tag.

[**0405]** The fourth signal is used for the first electronic tag to send the first signal.

[**0406]** In some embodiments, the second period is equal to the first period. The measurement unit 1601 is further configured to measure, according to the first period, the first signal sent by each electronic tag, when every time the second signal(s) are sent.

[**0407]** In some embodiments, in a case that the second signal(s) are received each time by each of at least two electronic tags, for different electronic tags of the at least two electronic tags, time intervals starting from a beginning time or an end time of receiving the second signal(s) every time to a time of sending the first signal every time are different, and each time interval is associated with each electronic tag, or the time interval is determined according to an identifier of each electronic tag.

[**0408]** In some embodiments, the measurement unit 1601 is further configured to measure, according to the first period, the first signal sent by each electronic tag in a case that the first trigger signaling sent by the first device includes activation indication information for indicating activation of periodic sending the first signal.

[**0409]** In some embodiments, in a case that the first trigger signaling, sent by the first device, includes deactivation indication information for indicating deactivation of sending the first signal, the communication unit is further configured to stop receiving the first signal sent by each electronic tag, or the measurement unit 1601 is further configured to stop measuring the first signal.

[**0410]** In some embodiments, in a case that the number of times of receiving the first signal sent by each electronic tag by the first device is greater than or equal to the first number of times of sending, the communication unit is further configured to stop receiving the first signal sent by each electronic tag, or the measurement unit 1601 is further configured to stop measuring the first signal.

[**0411]** In some embodiments, the first trigger signaling includes or indicates at least one of: one sequence or a group of sequences, a control signaling packet, an identifier of the first electronic tag, a group identifier corresponding to the first electronic tag, a temporary identifier of the first electronic tag, an EPC of the first electronic tag, the first period, the first number of times of sending the first signal, activation indication information or deactivation indication information, sending power information of the first signal, or sending frequency information of the first signal.

[**0412]** In some embodiments, the measuring unit 1601 is further configured to measure the first signal sent by each electronic tag according to the first period in a case that the first device sends the second signal(s) or the first device sends the second signal(s) through the first frequency.

[**0413]** In some embodiments, the measurement unit 1601 is further configured to measure the first signal sent by each electronic tag according to the first period in a case that the first device sends the first positioning request signal or the first device sends the first positioning request signal through the second frequency.

[**0414]** In some embodiments, the measurement unit 1601 is further configured to measure the first signal sent by each electronic tag according to the first period in a case that the first device sends the first indication information or the second indication information. The first indication information is used to instruct the second device to perform feedback, and the second indication information is used to instruct a device that receives the second indication information to perform feedback.

[**0415]** In some embodiments, the measurement unit 1601 is further configured to measure the first signal sent by each electronic tag, to obtain the at least one first measurement result in a case that the first device sends the second trigger signaling.

[**0416]** The second trigger signaling is used to instruct to send the first signal.

[**0417]** In some embodiments, the first signal includes or carries position information of the first electronic tag and/or an identifier of the first electronic tag.

[**0418]** In some embodiments, the communication device 1600 further includes a determination unit. The determination unit is configured to determine, from the at least one first measurement result, one or more target measurement results with a smallest difference from the third measurement result, and determine position information of the second device according to position information, of at least one electronic tag, corresponding to the one or more target measurement results.

[**0419]** In some embodiments, the communication unit is further configured to send the at least one first measurement result to a positioning control device. The communication unit is further configured to send the third measurement result to the positioning control device.

[**0420]** The third measurement result and the at least one first measurement result are used for the positioning control device to determine position information of the second device.

[**0421]** In some embodiments, the communication unit is further configured to receive the second positioning request signal sent by the second device, receive the third indication information sent by each of at least one third device. The third indication information indicates that the second positioning request signal is received by the third device.

[**0422]** The determining unit is further configured to determine the at least one electronic tag in the first region according to position information of the first device and position information of the at least one third device.

[**0423]** In some embodiments, the measurement unit 1601 is further configured to measure the second positioning request signal to obtain the fourth measurement result. The communication unit is further configured to receive the fifth measurement result sent by each third device. The fifth measurement result is obtained by measuring the second positioning request signal by each third device. The determination unit is further configured to determine the at least one electronic tag in the first region according to the position information of the first device, the position information of the at least one third device, the fourth measurement result, and the at least one fifth measurement result.

[**0424]** In some embodiments, the communication unit is further configured to broadcast the first indication information or the second indication information. The first indication information is used to instruct the second device to perform feedback, and the second indication information is used to instruct a device that receives the second indication information to perform feedback. The determination unit is further configured to determine that the second device is included in a coverage range of the first device, and/or determine the at least one electronic tag within the coverage range of the first device in a case that the feedback information sent by the second device is received by the first device.

[**0425]** In some embodiments, the determination unit is further configured to determine the at least one electronic tag within the first region in response to the input first region.

[**0426]** In some embodiments, the communication unit is further configured to receive the first region sent by the fourth device, and the determination unit is further configured to determine the at least one electronic tag within the first region.

[**0427]** In some embodiments, the determination unit is further configured to determine position information of the second device according to the third measurement result and the at least one first measurement result.

[**0428]** In some embodiments, the determination unit is further configured to determine the position information of the second device according to the third measurement result and the at least one first measurement result. The communication unit is further configured to send the position information of the second device to the second device or the positioning control device.

[**0429]** In some embodiments, the communication unit is further configured to send the third measurement result and the at least one first measurement result to the positioning control device.

[**0430]** In some embodiments, the communication unit is further configured to send the third measurement result and the at least one first measurement result to the positioning control device, and receive the position information of the second device sent by the positioning control device.

[**0431]** In some embodiments, the communication unit is further configured to send the third measurement result and the at least one first measurement result to the positioning control device, receive the position information of the second device sent by the positioning control device, and send the position information of the second device to the second device.

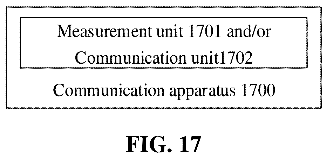

[**0432]** FIG. 17 is a schematic diagram of the structure and composition of yet another communication apparatus according to an embodiment of the present disclosure. The apparatus is applied to the second device. As illustrated in FIG. 17, the communication apparatus 1700 includes a measurement unit 1701 and/or a communication unit 1702.

[**0433]** The measurement unit 1701 is configured to measure the first signal sent by each of at least one electronic tag, to obtain at least one second measurement result. The at least one second measurement is used to determine position information of the second device.

[**0434]** The communication unit 1702 is configured to send the third signal. The third signal is used for measurement performed by the first device to obtain the third measurement result, and the third measurement result is used for determining the position information of the second device in combination with at least one first measurement result obtained by measuring, by the first device, the first signal sent by each of the at least one electronic tag.

[**0435]** In some embodiments, the communication unit 1702 is further configured to send the second positioning request signal. The second positioning request signal is able to be received by the first device and the at least one third device, and the second positioning request signal is used for the first device to determine the at least one electronic tag in the first region according to position information of the first device and position information of the at least one third device.

[**0436]** In some embodiments, the communication unit 1702 is further configured to receive the first indication information or second indication information sent by the first device. The first indication information is used to instruct the second device to perform feedback, and the second indication information is used to instruct a device that receives the second indication information to perform feedback. The communication unit 1702 is further configured to send feedback information to the first device. The feedback information is used for the first device to determine that the second device is comprised in a coverage range of the first device, and/or to determine the at least one electronic tag within the coverage range of the first device.

[**0437]** In some embodiments, the communication apparatus 1700 further includes a determination unit. The determination unit is configured to determine the position information of the second device according to the at least one second measurement result.

[**0438]** In some embodiments, the determination unit 1702 is further configured to determine the position information of the second device according to the at least one second measurement result, and the communication unit 1702 is further configured to send the position information of the second device to the first device or a positioning control device.

[**0439]** In some embodiments, the communication unit 1702 is further configured to send the at least one second measurement result to the first device or the positioning control device.

[**0440]** In some embodiments, the communication unit 1702 is further configured to send the at least one second measurement result to the first device or the positioning control device, and receive the position information of the second device sent by the first device or the positioning control device.

[**0441]** In some embodiments, the determination unit is further configured to determine, from the at least one first measurement result, one or more specific measurement results with a greatest value, and determine the position information of the second device according to position information, of the electronic tag, corresponding to the one or more specific measurement results.

[**0442]** In some embodiments, the first signal includes or carries position information of the first electronic tag and/or an identifier of the first electronic tag.

[**0443]** Those skilled in the art should understand that the related description of the above communication apparatuses according to the embodiments of the present disclosure may be understood with reference to the related description of the communication method according to the embodiments of the present disclosure.

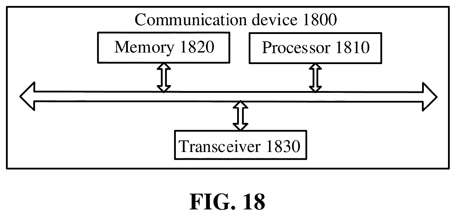

[**0444]** FIG. 18 is a schematic structural diagram of a communication device according to an embodiment of the present disclosure. The communication device 1800 may include one of the following: the first electronic tag, the first device, or the second device. The communication device 1800 illustrated in FIG. 18 may include a processor 1810 and a memory 1820. The memory 1820 is configured to store a computer program. The processor 1810 is configured to invoke and execute the computer program stored in the memory 1820 to perform the communication method in any of the embodiments described above. For example, the processor 1810 is configured to invoke and execute a computer program stored in the memory 1820 to cause the first electronic tag, the first device, or the second device to perform the communication method in any of the above embodiments.

[**0445]** Alternatively, the memory 1820 may be a separate device independent of the processor 1810 or may be integrated in the processor 1810.

[**0446]** In some embodiments, as illustrated in FIG. 18, the communication device 1800 may further include a transceiver 1830 that the processor 1810 may control to communicate with other devices, in particular, may send information or data to or receive information or data sent by other devices.

[**0447]** The transceiver 1830 may include a transmitter and a receiver. The transceiver 1830 may further include one or more antennas.

[**0448]** In some embodiments, the communication device 1800 may be specifically the first electronic tag, the first device, or the second device according to the embodiments of the present disclosure. The communication device 1800 may implement corresponding processes implemented by the first electronic tag, the first device, or the second device in each method according to the embodiment of the present disclosure, which will not be described herein for the sake of brevity.

[**0449]** Embodiments of the present disclosure further provide a computer storage medium. One or more programs are stored in the computer storage medium, and the one or more programs may be executed by one or more processors to implement the communication method in any embodiment of the present disclosure.

[**0450]** In some embodiments, the computer readable storage medium may be applied to the first electronic tag, the first device, or the second device in the embodiments of the present disclosure, and the computer program causes the computer to execute corresponding processes implemented by the first electronic tag, the first device, or the second device in each method of the embodiment of the present disclosure, which will not be described herein for the sake of brevity.

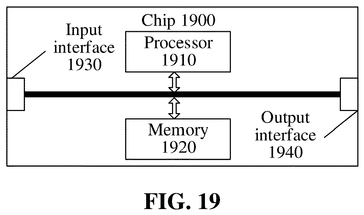

[**0451]** FIG. 19 is a schematic structural diagram of a chip according to an embodiment of the present disclosure. The chip 1900 illustrated in FIG. 19 includes a processor 1910. The processor is configured to invoke and execute a computer program from a memory to implement the method according to any embodiment of the present disclosure.

[**0452]** In some embodiments, as illustrated in FIG. 19, the chip 1900 may further include a memory 1920. The processor 1910 may invoke and execute a computer program from the memory 1920 to implement the methods in the embodiments of the present disclosure.

[**0453]** The memory 1920 may be a separate device independent of the processor 1910 or may be integrated in the processor 1910.

[**0454]** In some embodiments, the chip 1900 may further include an input interface 1930. The processor 1910 may control the input interface 1930 to communicate with other devices or chips, specifically, may acquire information or data sent by other devices or chips.

[***0455]*** In some embodiments, the chip 1900 may further include an output interface 1940. The processor 1910 may control the output interface 1940 to communicate with other devices or chips, specifically, may output information or data to other devices or chips.

[**0456]** In some embodiments, the chip may be applied to the first electronic tag, the first device, or the second device in the embodiments of the present disclosure, and the chip may implement corresponding processes implemented by the first electronic tag, the first device, or the second device in each method of the embodiment of the present disclosure, which will not be described herein for the sake of brevity.

[**0457]** It should be understood that the chip mentioned in the embodiments of the present disclosure may be called a system level chip, a system chip, a chip system or a system-on-chip or the like.

[**0458]** Embodiments of the present disclosure further provide a computer program product. The computer program product includes a computer storage medium storing a computer program. The computer program includes instructions executable by at least one processor that, when executed by the at least one processor, implement the communication method in any embodiment of the present disclosure.

[**0459]** In some embodiments, the computer program product may be applied to the first electronic tag, the first device, or the second device in the embodiments of the present disclosure, and the computer program instructions cause the computer to execute corresponding processes implemented by the first electronic tag, the first device, or the second device in each method of the embodiments of the present disclosure, which will not be described herein for the sake of brevity.

[**0460]** Alternatively, the computer program product in the embodiment of the present disclosure may also be referred to as a software product in other embodiments.

[**0461]** The embodiments of the present disclosure further provide a computer program that causes a computer to execute the communication method in any one of the embodiments of the present disclosure.

[**0462]** In some embodiments, the computer program may be applied to the first electronic tag, the first device, or the second device in the embodiments of the present disclosure, and when the computer program is executed on the computer, the computer executes the corresponding process implemented by the first electronic tag, the first device, or the second device in each method of the embodiment of the present disclosure, which will not be described herein for the sake of brevity.

[**0463]** The processor, the communication apparatus, or the chip of the embodiments of the present disclosure may be an integrated circuit chip with a signal processing capability. During an implementation process, each operation in the above method embodiments may be completed via an integrated logic circuit of hardware in the processor or an instruction in a software form. The processor, the communication apparatus or chip described above may include an integration of any one or more of the following: a universal processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), embedded neural-network processing units (NPU), a controller, a microcontroller, a microprocessor, a programmable logic device, a discrete gate or a transistor logic device, a discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

[**0464]** It is to be understood that the memory or computer storage medium in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

[**0465]** It is to be understood that the above memory or computer storage medium is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

[**0466]** Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

[**0467]** Those skilled in the art may clearly learn about that specific working processes of the system, apparatus and unit described above may refer to the corresponding processes in the method embodiments and will not be elaborated herein for convenient and brief description.

[**0468]** In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

[**0469]** The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

[**0470]** In addition, each functional unit in each embodiment of the present disclosure may be integrated into a processing unit, each unit may also physically exist independently, and two or more than two units may also be integrated into a unit.

[**0471]** In any one embodiment of the present disclosure, a time interval, a time period, a time range, a duration, a time window, etc. may include all of the endpoint times, or may include part of the endpoint times (for example, including the left endpoint time but not including the right endpoint time, or including the right endpoint time but not including the left endpoint time), or may not include the endpoint times.

[**0472]** When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

[**0473]** The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A communication method, comprising:
sending, by a first electronic tag, a first signal, wherein the first signal is used for measurement performed by a first device to obtain a first measurement result or for measurement performed by a second device to obtain a second measurement result, and the first measurement result or the second measurement result is used for determining position information of the second device.

2. The method of claim 1, wherein sending, by the first electronic tag, the first signal comprises:
sending, by the first electronic tag, the first signal according to a first period.

3. The method of claim 2, further comprising:
receiving, by the first electronic tag, second signal(s) according to a second period, wherein the second period is less than or equal to the first period.

4. The method of claim 3, wherein the second signal(s) comprises a third signal and/or a fourth signal,
wherein the third signal is used for at least one of: identifying the first electronic tag, waking up the first electronic tag, or powering the first electronic tag; and
the fourth signal is used for the first electronic tag to send the first signal.

5. The method of claim 3 or 4, wherein the second period is equal to the first period; and
sending, by the first electronic tag, the first signal according to the first period comprises:
sending, by the first electronic tag according to the first period, the first signal every time the second signal(s) is received.

6. The method of claim 5, wherein sending, by the first electronic tag according to the first period, the first signal every time the second signal(s) is received comprises:
sending, by the first electronic tag according to the first period, the first signal at a time interval of a first duration starting from a beginning time or an end time of receiving the second signal(s), every time the second signal(s) are received,
wherein the first duration is associated with the first electronic tag, or the first duration is determined according to an identifier of the first electronic tag.

7. The method of claim 2, wherein sending, by the first electronic tag, the first signal according to the first period comprises:
in a case that a first trigger signaling, received by the first electronic tag, comprises activation indication information for indicating activation of periodic sending the first signal, sending, by the first electronic tag, the first signal according to the first period.

8. The method of any one of claims 1 to 7, further comprising:
in a case that a first trigger signaling, received by the first electronic tag, comprises deactivation indication information for indicating deactivation of sending the first signal, stopping sending, by the first electronic tag, the first signal; or
in a case that a number of times of sending the first signal by the first electronic tag is greater than or equal to a first number of times of sending, stopping sending, by the first electronic tag, the first signal.

9. The method of claim 7 or 8, wherein the first trigger signaling comprises or indicates at least one of: one sequence or a group of sequences, a control signaling packet, an identifier of the first electronic tag, a group identifier corresponding to the first electronic tag, a temporary identifier of the first electronic tag, an Electronic Product Code (EPC) of the first electronic tag, the first period, the first number of times of sending the first signal, activation indication information or deactivation indication information, sending power information of the first signal, or sending frequency information of the first signal.

10. The method of claim 2, wherein sending, by the first electronic tag, the first signal according to the first period comprises:
in a case that second signal(s) is received by the first electronic tag, and/or the second signal(s) is received by the first electronic tag through a first frequency, and/or an energy/a power for receiving the second signal(s) by the first electronic tag is greater than or equal to a first threshold, sending, by the first electronic tag, the first signal according to the first period; or
in a case that a first positioning request signal is received by the first electronic tag, and/or the first positioning request signal is received by the first electronic tag through a second frequency, or an energy/a power for receiving the first positioning request signal by the first electronic tag is greater than or equal to a second threshold, sending, by the first electronic tag, the first signal according to the first period; or
in a case that first indication information or second indication information is received by the first electronic tag, sending, by the first electronic tag, the first signal according to the first period, wherein the first indication information is used to instruct the second device to perform feedback, and the second indication information is used to instruct a device that receives the second indication information to perform feedback.

11. The method of any one of claims 1 to 10, wherein sending, by the first electronic tag, the first signal comprises:
in a case that a second trigger signaling is received by the first electronic tag, sending, by the first electronic tag, the first signal,
wherein the second trigger signaling is used to instruct to send the first signal.

12. The method of any one of claims 1 to 10, wherein the first signal comprises or carries position information of the first electronic tag and/or an identifier of the first electronic tag.

13. A communication method, comprising:
measuring, by a first device, a first signal sent by each of at least one electronic tag, to obtain at least one first measurement result; and
measuring, by the first device, a third signal sent by a second device, to obtain a third measurement result,
wherein the third measurement result and the at least one first measurement result are used to determine position information of the second device.

14. The method of claim 13, wherein measuring, by the first device, the first signal sent by each of the at least one electronic tag comprises:
measuring, by the first device according to a first period, the first signal sent by each electronic tag.

15. The method of claim 14, further comprising:
sending, by the first device, second signal(s) according to a second period, wherein the second period is less than or equal to the first period.

16. The method of claim 15, wherein the second signal(s) comprises a third signal and/or a fourth signal,
wherein the third signal is used for at least one of: identifying the first electronic tag, waking up the first electronic tag, or powering the first electronic tag; and
the fourth signal is used for the first electronic tag to send the first signal.

17. The method of claim 15 or 16, wherein the second period is equal to the first period; and
measuring, by the first device according to the first period, the first signal sent by each electronic tag comprises:
when every time the second signal(s) is sent, measuring, by the first device according to the first period, the first signal sent by each electronic tag.

18. The method of claim 17, wherein in a case that the second signal(s) is received each time by each of at least two electronic tags, for different electronic tags of the at least two electronic tags, time intervals starting from a beginning time or an end time of receiving the second signal(s) every time to a time of sending the first signal every time are different, and each time interval is associated with each electronic tag, or the time interval is determined according to an identifier of each electronic tag.

19. The method of claim 14, wherein measuring, by the first device according to the first period, the first signal sent by each electronic tag comprises:
in a case that a first trigger signaling sent by the first device comprises activation indication information for indicating activation of periodic sending the first signal, measuring, by the first device according to the first period, the first signal sent by each electronic tag.

20. The method of any one of claims 13 to 19, further comprising:
in a case that a first trigger signaling, sent by the first device, comprises deactivation indication information for indicating deactivation of sending the first signal, stopping receiving, by the first device, the first signal sent by each electronic tag, or stopping measuring, by the first device, the first signal; or
in a case that a number of times of receiving the first signal sent by each electronic tag by the first device is greater than or equal to a first number of times of sending, stopping receiving, by the first device, the first signal sent by each electronic tag, or stopping measuring, by the first device, the first signal.

21. The method of claim 19 or 20, wherein the first trigger signaling comprises or indicates at least one of: one sequence or a group of sequences, a control signaling packet, an identifier of the first electronic tag, a group identifier corresponding to the first electronic tag, a temporary identifier of the first electronic tag, an Electronic Product Code (EPC) of the first electronic tag, the first period, the first number of times of sending the first signal, activation indication information or deactivation indication information, sending power information of the first signal, or sending frequency information of the first signal.

22. The method of claim 14, wherein measuring, by the first device according to the first period, the first signal sent by each electronic tag comprises:
in a case that the first device sends second signal(s) or the first device sends the second signal(s) through a first frequency, measuring, by the first device according to the first period, the first signal sent by each electronic tag; or
in a case that the first device sends a first positioning request signal or the first device sends the first positioning request signal through a second frequency, measuring, by the first device according to the first period, the first signal sent by each electronic tag; or
in a case that the first device sends first indication information or second indication information, measuring, by the first device according to the first period, the first signal sent by each electronic tag, wherein the first indication information is used to instruct the second device to perform feedback, and the second indication information is used to instruct a device that receives the second indication information to perform feedback.

23. The method of any one of claims 13 to 22, wherein measuring, by the first device, the first signal sent by each of the at least one electronic tag, to obtain the at least one first measurement result comprises:
in a case that the first device sends a second trigger signaling, measuring, by the first device, the first signal sent by each electronic tag, to obtain the at least one first measurement result,
wherein the second trigger signaling is used to instruct to send the first signal.

24. The method of any one of claims 13 to 23, wherein the first signal comprises or carries position information of a first electronic tag and/or an identifier of the first electronic tag.

25. The method of any one of claims 13 to 24, further comprising:
determining, by the first device from the at least one first measurement result, one or more target measurement results with a smallest difference from the third measurement result; and
determining, by the first device, position information of the second device according to position information of at least one electronic tag corresponding to the one or more target measurement results.

26. The method of any one of claims 13 to 24, further comprising:
sending, by the first device, the at least one first measurement result to a positioning control device; and
sending, by the first device, the third measurement result to the positioning control device,
wherein the third measurement result and the at least one first measurement result are used for the positioning control device to determine position information of the second device.

27. The method of any one of claims 13 to 26, further comprising:
receiving, by the first device, a second positioning request signal sent by the second device;
receiving, by the first device, third indication information sent by each of at least one third device, wherein the third indication information indicates that the second positioning request signal is received by the third device; and
determining, by the first device, the at least one electronic tag in a first region according to position information of the first device and position information of the at least one third device.

28. The method of claim 27, further comprising:
measuring, by the first device, the second positioning request signal to obtain a fourth measurement result; and
receiving, by the first device, a fifth measurement result sent by each third device, wherein the fifth measurement result is obtained by measuring the second positioning request signal by each third device;
determining, by the first device, the at least one electronic tag in the first region according to the position information of the first device and the position information of the at least one third device comprises:
determining, by the first device, the at least one electronic tag in the first region according to the position information of the first device, the position information of the at least one third device, the fourth measurement result, and at least one fifth measurement result.

29. The method of any one of claims 13 to 26, further comprising:
broadcasting, by the first device, first indication information or second indication information, wherein the first indication information is used to instruct the second device to perform feedback, and the second indication information is used to instruct a device that receives the second indication information to perform feedback; and
in a case that feedback information sent by the second device is received by the first device, determining, by the first device, that the second device is comprised in a coverage range of the first device, and/or determining, by the first device, the at least one electronic tag within the coverage range of the first device.

30. The method of any one of claims 13 to 26, further comprising:
in response to an input first region, determining, by the first device, the at least one electronic tag within the first region; or
receiving, by the first device, the first region sent by a fourth device, and determining, by the first device, the at least one electronic tag within the first region.

31. The method of any one of claims 13 to 30, further comprising:
determining, by the first device, position information of the second device according to the third measurement result and the at least one first measurement result; or
determining, by the first device, the position information of the second device according to the third measurement result and the at least one first measurement result, and sending, by the first device, the position information of the second device to the second device or a positioning control device; or
sending, by the first device, the third measurement result and the at least one first measurement result to the positioning control device; or
sending, by the first device, the third measurement result and the at least one first measurement result to the positioning control device, and receiving, by the first device, the position information of the second device sent by the positioning control device; or
sending, by the first device, the third measurement result and the at least one first measurement result to the positioning control device, receiving, by the first device, the position information of the second device sent by the positioning control device, and sending, by the first device, the position information of the second device to the second device.

32. A communication method, comprising:
measuring, by a second device, a first signal sent by each of at least one electronic tag, to obtain at least one second measurement result, wherein the at least one second measurement result is used to determine position information of the second device; and/or
sending, by the second device, a third signal, wherein the third signal is used for measurement performed by a first device to obtain a third measurement result, and the third measurement result is used for determining the position information of the second device in combination with at least one first measurement result obtained by measuring, by the first device, the first signal sent by each of the at least one electronic tag.

33. The method of claim 32, further comprising:
sending, by the second device, a second positioning request signal, wherein the second positioning request signal is able to be received by the first device and at least one third device, and the second positioning request signal is used for the first device to determine the at least one electronic tag in a first region according to position information of the first device and position information of the at least one third device.

34. The method of claim 32, further comprising:
receiving, by the second device, first indication information or second indication information sent by the first device, wherein the first indication information is used to instruct the second device to perform feedback, and the second indication information is used to instruct a device that receives the second indication information to perform feedback; and
sending, by the second device, feedback information to the first device, wherein the feedback information is used for the first device to determine that the second device is comprised in a coverage range of the first device, and/or to determine the at least one electronic tag within the coverage range of the first device.

35. The method of any one of claims 32 to 34, further comprising:
determining, by the second device, the position information of the second device according to the at least one second measurement result; or
determining, by the second device, the position information of the second device according to the at least one second measurement result, and sending, by the second device, the position information of the second device to the first device or a positioning control device; or
sending, by the second device, the at least one second measurement result to the first device or the positioning control device; or
sending, by the second device, the at least one second measurement result to the first device or the positioning control device, and receiving, by the second device, the position information of the second device sent by the first device or the positioning control device.

36. The method of claim 35, wherein determining, by the second device, the position information of the second device according to the at least one second measurement result comprises:
determining, by the second device from the at least one first measurement result, one or more specific measurement results with a greatest value; and
determining, by the second device, the position information of the second device according to position information of at least one electronic tag corresponding to the one or more specific measurement results.

37. The method of any one of claims 32 to 36, wherein the first signal comprises or carries position information of the first electronic tag and/or an identifier of the first electronic tag.

38. A communication apparatus, comprising:
a communication unit, configured to send a first signal, wherein the first signal is used for measurement performed by a first device to obtain a first measurement result or for measurement performed by a second device to obtain a second measurement result, and the first measurement result or the second measurement result is used for determining position information of the second device.

39. A communication apparatus, comprising:
a measurement unit, configured to measure a first signal sent by each of at least one electronic tag, to obtain at least one first measurement result,
wherein the measurement unit is further configured to measure a third signal sent by a second device, to obtain a third measurement result,
wherein the third measurement result and the at least one first measurement result are used to determine position information of the second device.

40. A communication apparatus, comprising:
a measurement unit, configured to measure a first signal sent by each of at least one electronic tag, to obtain at least one second measurement result, wherein the at least one second measurement result is used to determine position information of the second device; and/or
a communication unit, configured to send a third signal, wherein the third signal is used for measurement performed by a first device to obtain a third measurement result, and the third measurement result is used for determining the position information of the second device in combination with at least one first measurement result obtained by measuring, by the first device, the first signal sent by each of the at least one electronic tag.

41. A communication device, comprising: a processor and a memory,
wherein the memory is configured to store a computer program, and
the processor is configured to invoke and execute a computer program stored in the memory to perform the method of any one of claims 1 to 12, or any one of claims 13 to 31, or any one of 32 to 37.

42. A computer storage medium, storing one or more programs executable by one or more processors to implement the method of any one of claims 1 to 12, or any one of 13 to 31, or any one of 32 to 37.

43. A chip, comprising: a processor, wherein the processor is configured to invoke and execute a computer program from a memory to implement the method of any one of claims 1 to 12, or any one of claims 13 to 31, or any one of claims 32 to 37.

44. A computer program product, comprising: a computer storage medium storing a computer program, wherein the computer program comprises instructions executable by at least one processor that, when executed by the at least one processor, implement the method of any one of claims 1 to 12, or any one of 13 to 31, or any one of 32 to 37.

45. A computer program, causing a computer to perform the method of any one of claims 1 to 12, or any one of 13 to 31, or any one of 32 to 37.
